(19) Europäisches Patentamt
European Patent Office
Office européen des brevets

(11) **EP 3 244 255 B1**

(12) **FASCICULE DE BREVET EUROPEEN**

(45) Date de publication et mention
de la délivrance du brevet:
**04.12.2024 Bulletin 2024/49**

(21) Numéro de dépôt: **16305567.6**

(22) Date de dépôt: **13.05.2016**

(51) Classification Internationale des Brevets (IPC):
**G02C 7/02** *(2006.01)* **G02C 7/10** *(2006.01)*
**G02C 13/00** *(2006.01)* **A61B 3/00** *(2006.01)*

(52) Classification Coopérative des Brevets (CPC):
**G02C 7/027; G02C 7/028; G02C 7/104;
G02C 13/005;** G02C 13/003

(54) **AIDE À LA DÉTERMINATION DU NIVEAU DE DIFFÉRENCE ENTRE UN PREMIER VERRE OPHTALMIQUE ET UNE RÉFÉRENCE OPHTALMIQUE**

HILFSVORRICHTUNG FÜR DIE BESTIMMUNG DES DIFFERENZNIVEAUS ZWISCHEN EINEM ERSTEN BRILLENGLAS UND EINER OPHTALMISCHEN REFERENZ

MEANS FOR DETERMINING THE LEVEL DIFFERENCE BETWEEN A FIRST OPHTHALMIC LENS AND AN OPHTHALMIC REFERENCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**15.11.2017 Bulletin 2017/46**

(73) Titulaire: **Essilor International
94220 Charenton-le-Pont (FR)**

(72) Inventeurs:
• **ESCALIER, Guilhem
94227 CHARENTON LE PONT CEDEX (FR)**
• **PERRIN, Jean-Luc
94227 CHARENTON LE PONT CEDEX (FR)**

(74) Mandataire: **Plasseraud IP
104 Rue de Richelieu
CS92104
75080 Paris Cedex 02 (FR)**

(56) Documents cités:
**EP-A1- 1 950 601 WO-A1-2006/020422
WO-A1-2010/072840 WO-A1-2015/017360
WO-A2-2014/011581 US-A1- 2014 293 220**

**Description**

Domaine technique de l'invention

La présente invention concerne le domaine technique de l'optique ophtalmique et plus particulièrement le domaine des outils d'aide à la caractérisation de verre ophtalmique et à la comparaison d'un verre ophtalmique avec une référence ophtalmique ou un autre verre ophtalmique. Dans le cadre du présent document on nomme indifféremment « verre » ou « lentille ophtalmique » ou « lentille » une lentille destinée à équiper la monture d'un porteur.

Etat de la technique

La personnalisation des verres ophtalmiques est un domaine technique en plein essor. Sa mise en oeuvre nécessite entre autres des mesures d'un ou plusieurs paramètres physiques, physiologiques, comportementales, etc. Ces paramètres permettent la détermination de verres ophtalmiques auxquels sont ajoutés des paramètres de conception liés notamment au procédé de détermination de verre ophtalmique utilisé ou au type de verre ophtalmique voulu.

Cependant, il est parfois difficile de prévoir si la personnalisation aboutit à un verre ophtalmique suffisamment différent d'un verre ophtalmique non personnalisé pour que le porteur et/ou un professionnel de la santé visuelle perçoive la différence.

Par ailleurs, la personnalisation d'un verre ophtalmique implique la mesure de paramètres de conception tributaire d'erreurs intrinsèques à cette mesure de sorte qu'il soit possible que des verres ophtalmiques déterminés à partir de mesures successives de paramètres de conception associés au porteur en utilisant un même procédé de détermination de verres ophtalmiques aboutisse à des résultats différents. Il serait intéressant pour le professionnel de la santé visuelle de pouvoir savoir le niveau de différence entre ces verres ophtalmiques déterminés.

Il n'existe pas actuellement de technique simple permettant à un professionnel de la santé visuelle ou au futur porteur de déterminer si deux verres ophtalmiques sont suffisamment différents pour que ce dernier perçoive une différence lorsqu'il porte le verre ophtalmique.

WO2006/020422 montre la performance optiques de différentes lentilles.

Présentation de l'invention

L'objectif de la présente invention est de proposer un procédé offrant la possibilité à un porteur et/ou un professionnel de la santé visuelle, appelé utilisateur, de savoir si un verre ophtalmique est différent d'une référence ophtalmique ou d'un autre verre ophtalmique.

Pour cela la présente invention propose un système de détermination du niveau de différence entre deux verres ophtalmiques caractérisés selon la revendication 1.

La présente invention propose également un procédé pour l'aide à la détermination du niveau de différence entre deux verres ophtalmiques caractérisés par un ou plusieurs paramètres de comparaison selon la revendication 1.

D'autres caractéristiques optionnelles et non limitatives du système sont présentées dans la description donnée ci-après, parmi lesquelles :

/1/ l'interface d'acquisition est adaptée pour permettre l'entrée des paramètres parmi : des paramètres de conception, des paramètres de définition, des paramètres de comparaison ;

/2/ le calculateur est adapté pour déterminer des paramètres parmi : des paramètres de définition, des paramètres de comparaison ;

notamment :

- des paramètres de comparaison directement à partir de paramètres de définition ;
- des paramètres de définition directement à partir de paramètres de conception ;

/3/ le calculateur est adapté pour déterminer des paramètres de définition ou des paramètres de comparaison à partir d'un verre ophtalmique ;

/4/ le calculateur est aussi adapté pour déterminer un verre ophtalmique à partir de paramètre de conception ;

/5/ le système comprend en outre un récupérateur adapté pour récupérer des paramètres à partir d'une banque de données de verres ophtalmiques et/ou de références ophtalmiques ; notamment, le récupérateur est adapté pour récupérer des paramètres parmi : des paramètres de conception, des paramètres de définition, des paramètres de comparaison ;

/6/ le système comprend en outre un ou plusieurs instruments de mesure adaptés à la mesure de paramètre de conception et relié à l'interface d'acquisition ;

/7/ le système peut comprendre en outre un déclencheur de stimuli pour provoquer des stimuli sensoriels et relié au convertisseur ;

/8/ dans le cas de stimuli visuels, le déclencheur de stimuli est choisi parmi un écran, une imprimante couleur, un support imprimé tel que papier ou tissue, une LED RGB permettant une modulation spectrale de son éclairage ;

/9/ dans le cas de stimuli auditifs, le déclencheur de stimuli est choisi parmi hautparleurs, notamment électrodynamique, piézoélectrique ou à ruban ;

/10/ le système comprend en outre un ajusteur de niveau de stimulus sensoriel et/ou un ajusteur de seuil local relié soit au convertisseur soit au déclencheur de stimuli.

D'autres caractéristiques optionnelles et non limitatives du procédé sont présentées dans les revendications dépendantes 4 à 13.

## Brève description des dessins

D'autres objectifs, avantages et caractéristiques apparaitront à la lecture de la description qui suit en référence aux dessins donnés à titre illustratif et non limitatif, parmi lesquels :

- la figure 1 et un organigramme illustrant les différentes étapes du procédé selon l'invention ;
- la figure 2 est un organigramme illustrant les détails de l'étape d'obtention de paramètres de comparaison;
- la figure 3 est un organigramme illustrant les détails de l'étape d'obtention de paramètres de comparaison selon un autre mode de réalisation de l'invention ;
- la figure 4 est un organigramme illustrant les détails de l'étape d'obtention de paramètres de comparaison selon un autre mode de réalisation de l'invention ;
- la figure 5 est un graphe montrant la relation entre LP100% et $LP_{NVB}$ utilisé dans l'exemple 1 décrit ci-dessous ;
- la figure 6 est un graphe montrant la relation entre LP85% et le ratio NVB utilisé dans l'exemple 1 ;
- la figure 7 est un graphe montrant le domaine possible des couples LP100% et LP85% ;
- la figure 8 est un graphe montrant le domaine possible des couples abaissement/ratio NVB obtenu par transposition du graphe de la figure 7 ;
- la figure 9 est un schéma illustrant le maillage d'un espace de couleurs CIE L*a*b* tel qu'utilisé dans l'exemple 1 ;
- la figure 10 est un schéma illustrant la transposition du maillage de la figure 9 à un espace de couleurs RGB ;
- la figure 11 est un schéma illustrant trois positions de l'espace de couleurs retranscrits sur le graphe de la figure 7 et montrant pour chacune des positions la zone dans laquelle la distance entre les paramètres de comparaison de deux points pris à l'intérieur de celle-ci est inférieure au seuil local ;
- la figure 12 est un schéma illustrant les trois positions de l'espace de couleurs de la figure 11, mais cette fois-ci retranscrit sur le graphe de la figure 8, et montrant pour chacun des positions la zone dans laquelle la distance entre les paramètres de comparaison de deux points pris à l'intérieur de celle-ci est inférieure au seul local ;
- la figure 13 est un schéma illustrant une représentation de l'espace de couleurs RGB, généralement utilisé pour l'affichage sur écran ;
- la figure 14 est un schéma illustrant l'inclusion de l'espace de couleurs RGB de la figure 13 dans l'espace de couleurs CIE L*a*b* ;
- la figure 15 est un schéma illustrant un système pour l'aide à la détermination du niveau de différence entre un premier verre ophtalmique et une référence ophtalmique ; et
- la figure 16 est un schéma illustrant la définition des coordonnées $(\alpha, \beta)$.

## Description de l'invention

### *Définition*

Dans l'ensemble du présent exposé, la verticalité ou l'horizontalité d'une caractéristique est à considérer par rapport au verre ophtalmique placé dans la position normale d'utilisation.

Dans la suite de l'exposé, on désignera par les termes « paramètre de comparaison » (notés *pcp.1* à *pcp.s* ou encore désignés par l'ensemble PCP à *s* éléments), tout paramètre lié à un verre ophtalmique que l'on souhaite comparer avec une référence ophtalmique ou un autre verre ophtalmique. Ce paramètre de comparaison peut concerner bon nombre de propriétés du verre ophtalmique, parmi lesquels peuvent être citées les propriétés géométriques, les propriétés optiques, les propriétés mécaniques, les propriétés de confort et les propriétés esthétiques

Le ou les paramètres de comparaison peuvent être choisis parmi : LPX%, notamment avec X égal à 100 ; $\Delta$LPX%, notamment X égal à 85 ; décalage latéral en vision de près par rapport à la croix de montage en vision de loin ; largeur de champs ; épaisseur du verre ophtalmique en au moins un point ; poids du verre ophtalmique ; matière du verre ophtalmique ; coloration du verre ophtalmique (statique ou transitoire, notamment à un instant T après le début du déclenchement d'un stimulus causant un changement de coloration) ; type de revêtement ; un niveau d'aberration optique (astigmatisme résiduel, puissance sphérique ou coma par exemple) en au moins un point ; un niveau de contraste/acuité en au moins un point ; un niveau de grossissement en au moins un point ; un niveau de transmission en au moins un point ; un niveau de teinte en au moins un point ; et niveau et type de traitement (tel que antireflet).

Dans le cas d'un verre progressif, le paramètre LPX% est la longueur de progression (partielle ou totale) définie par la distance verticale, exprimée notamment en mm dans le plan du verre, entre la croix de montage et le point d'intersection de la direction de regard correspondant à la direction de regard en vision de près avec le plan du verre et où, le long de la méridienne, le porteur perçoit une puissance équivalente à la puissance en vision de loin augmentée de X% de l'addition prescrite, par exemple X peut valoir 85. Il convient de noter qu'une longueur de progression peut également être exprimée sous la forme d'un écart angulaire, en degré, quand on considère les propriétés optiques d'une lentille dans un repère ($\alpha$, $\beta$) et que cet écart angulaire peut être transformé de manière connue en une distance exprimée en mm.

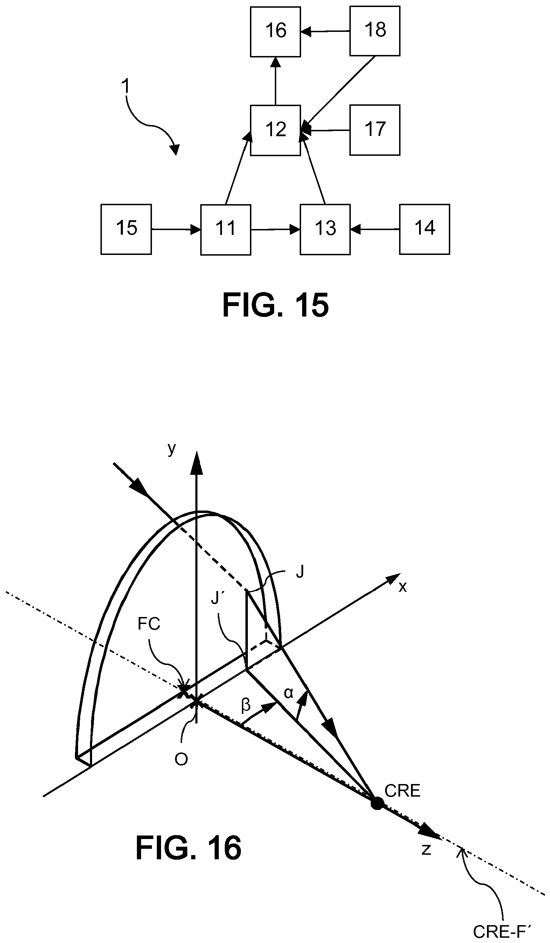

Le repère ($\alpha$, $\beta$) est un repère défini par rapport au centre de rotation de l'œil CRE considéré qui est pris comme centre du repère afin de définir des directions de regard (voir figure 16). On définit par ailleurs un axe horizontal CRE-F' qui passe par CRE et s'étend devant le porteur, c'est ce qu'on appelle la direction de regard primaire. Un verre ophtalmique est positionné et centré devant l'œil du porteur de manière à ce que l'axe CRE-F' intersecte la face avant du verre ophtalmique à un point appelé la croix de montage FC, qui est, de manière générale, présente sur les verres ophtalmiques pour permettre le positionnement de ceux-ci dans une monture par un opticien. Le point d'intersection entre la face arrière du verre ophtalmique et l'axe CRE-F' est noté point O. Généralement, O est espacé de 25,5 mm de CRE.

Chaque direction de regard, définie par le couple d'angles ($\alpha$, $\beta$), correspond à une position de l'oeil en rotation autour de CRE. La direction de regard passant par J, J' étant la projection de J sur un plan horizontal passant par CRE, l'angle $\alpha$ est l'angle formé par J'-CRE-J et $\beta$, l'angle formé par O-CRE-J'. Le repère ($\alpha$, $\beta$) peut également être transformé en un repère (x, y) qui correspond à un repère orthonormal classique positionné sur un plan P normal à l'axe CRE-F' et passant par O.

La méridienne est une courbe traversant le verre ophtalmique de haut en bas et correspond aux directions de regard de l'oeil lorsque celui-ci balaye de haut en bas tout en regardant droit devant. À partir d'un verre ophtalmique progressif, la méridienne est approximativement obtenue en considérant la ligne centrale marquant l'équidistance (pris horizontalement) entre les lignes iso-dioptres de valeur égale à 0,25 D dues à l'astigmatisme résiduel résultant de la variation de puissance sphérique. De manière plus spécifique, la méridienne peut être calculée pour un verre ophtalmique progressif de la manière suivante :

- la direction de regard correspondant à la croix de montage est définie ($\alpha_{FC}$, $\beta_{FC}$) (qui peut ne pas être (0,0), notamment du fait des effets optiques du verre ophtalmique) ;
- l'angle d'abaissement $\alpha_{NV}$ correspondant à la direction de regard en vision de près est calculé (par exemple en utilisant un protocole dans lequel une cible est affichée dans le champ de vision du porteur à différentes positions prédéterminées et correspondant généralement aux directions de regard lors d'une activité nécessitant une vision de près, et notamment la lecture) ;
- pour chaque angle d'abaissement compris entre $\alpha_{FC}$ et $\alpha_{NV}$, l'angle $\beta$ correspondant à la direction à mi-chemin entre les deux lignes iso-dioptres dues à l'astigmatisme résiduel de valeur 0,25 D est calculé ; ces directions calculées sont notées ($\alpha_i$, $\beta_i$) ; une ligne droite d2 est calculée pour minimiser la déviation de ($\alpha_i$, $\beta_i$) à la ligne droite d2 selon l'équation suivant :

$$d2 : \beta(\alpha) = a_2\alpha + b_2 ; \alpha_{FC} < \alpha < \alpha_{NV}$$

$$a_2, b_2 : min\left\{ \sum_i \left(a_2\alpha_i + b_2 - \beta_i\right)^2 \right\},$$

où « min » est la fonction minimum ;
- une direction pivot ($\alpha_{PIV}$, $\beta_{PIV}$) définie comme l'intersection entre la ligne droite d2 et une ligne correspondant à $\beta$ = $\beta_{FC}$, est calculée :

$$\begin{cases} \alpha_{PIV} = \dfrac{(\beta_{FC} - b_2)}{a_2} \\ \beta_{PIV} = \beta_{FC} \end{cases} ;$$

- une ligne droite d1 est calculée de manière à ce que

$$d1 : \beta(\alpha) = \beta_{PIV} \text{ pour } \alpha < \alpha_{PIV} ;$$

- $\beta_{NV}$ est déterminé comme l'angle $\beta$ de la ligne droite d2 pour $\alpha_{NV}$ :

$$\beta_{NV} = a_2\alpha_{NV} + b_2 ;$$

- pour chaque angle d'abaissement $\alpha$ supérieur à $\alpha_{NV}$, l'angle $\beta$ correspondant à la direction à mi-chemin entre les deux lignes iso-dioptres dues à l'astigmatisme résiduel de valeur 0,25 D est déterminé ; les directions ainsi calculées sont désignées $(\alpha_j, \beta_j)$ ; une ligne droite d3 est calculée de manière à minimiser la déviation de $(\alpha_j, \beta_j)$ par rapport à la ligne droite d3 et passant par le point $(\alpha_{NV}, \beta_{NV})$, si la pente calculée est négative, la pente choisie est fixée à 0 ; d3 est ainsi définie selon l'équation suivante :

$$d3 : \beta(\alpha) = a_3(\alpha - \alpha_{NV}) + \beta_{NV} ; \alpha_{NV} < \alpha$$

$$a_3 : min \left\{ \sum_j (a_3(\alpha_j - \alpha_{NV}) + \beta_{NV} - \beta_j)^2 ; a_3 \geq 0 \right\} ;$$

- la méridienne est finalement définie comme la ligne construite en joignant les segments d1, d2 et d3.

Dans le cas d'un verre progressif, le paramètre Inset est le décalage latéral (horizontal) entre le point de vision de près et la croix de montage en vision de loin lorsque ceux-ci sont projetés orthogonalement sur une droite horizontale. Ce paramètre est généralement exprimé en mm dans le plan du verre. Il convient de noter qu'un décalage latéral peut également être exprimé sous la forme d'un écart angulaire, en degré, quand on considère les propriétés optiques d'une lentille dans un repère $(\alpha, \beta)$ et que cet écart angulaire peut être transformé de manière connue en une distance exprimée en mm.

On désignera encore par les termes « paramètre de conception » (notés *pcc.1* à *pcc.q* ou désignés par l'ensemble PCC à *q* éléments), tout paramètre permettant la détermination d'un verre ophtalmique. De tels paramètres sont généralement les paramètres dont le fabricant de verre ophtalmique a besoin pour concevoir le verre ophtalmique. Les paramètres de conception peuvent être associés au porteur en ce sens où ils sont déterminés sur ou par celui-ci, que ce soit ses prescriptions, ses caractéristiques morphologiques du visage, les conditions de port (notamment la position du verre devant l'oeil), ses habitudes et ou activités impliquant particulièrement l'usage de la vue (incluant sa posture et son comportement visuel tel que le coefficient oeil/tête), sa sensibilité à la lumière, son choix de traitement des verres ophtalmiques, etc.. Lorsqu'il est indiqué que les paramètres de conception sont mesurés sur ou par le porteur, cela comprend les mesures appliquées au porteur pour déterminer par exemple la prescription, les habitudes du porteur lors d'activités nécessitant la vision, etc., ou les mesures obtenus par questionnaire auquel le porteur répond. Les paramètres de conception peuvent aussi être associés au type de verre ophtalmique choisi. Ce paramètre de conception peut être par exemple choisi parmi : forme de la monture, morphologie du visage du porteur, position du verre ophtalmique devant l'oeil, niveau de sensibilité à la lumière, prescription, valeur d'addition, zone d'usure sur une période déterminée, distance de lecture, coefficient oeil/tête, abaissement de regard moyen en vision de près (notamment pendant la lecture), ratio NVB, variabilité dans le temps d'un de ceux-ci, et choix du traitement appliqué. Cela inclut également le cas où un paramètre est évalué par questionnaire rempli par le porteur.

On désignera par les termes « paramètre de définition » (notés *pdf.1* à *pdf.r* ou désignés par l'ensemble PDF à *r* éléments), tout paramètre permettant de décrire un verre ophtalmique et concernant notamment : son matériau, ses dimensions, la base du verre, le type de verre (unifocal, progressif...), sa surface avant du verre, sa surface arrière, la position de points de contrôle, la position de la croix ou du centre de montage, la position du point de référence prisme, le prisme d'allègement...Bien que pouvant être un même paramètre, on prendra soin de distinguer la fonction d'un paramètre de comparaison, de celle d'un paramètre de conception et de celle d'un paramètre de définition. En effet, la fonction d'un paramètre de comparaison est de permettre la comparaison entre deux verres ophtalmiques ; le paramètre de comparaison est un paramètre pour lequel l'utilisateur souhaite connaître la variabilité par rapport aux paramètres de conception et/ou de définition. Celle d'un paramètre de conception est de permettre la détermination d'un verre ophtalmique. Enfin, celle du paramètre de définition est de définir objectivement un verre ophtalmique en tant qu'objet.

En d'autres termes, les paramètres de conception sont les paramètres permettant de déterminer un verre ophtalmique. Alors que les paramètres de définition permettent une description des propriétés du verre ophtalmique, et les paramètres de comparaisons sont les paramètres par rapport auxquels on souhaite comparer un verre ophtalmique avec une référence ophtalmique.. Ainsi, les paramètres de conception ont un impact sur les paramètres de comparaison.

Par ailleurs, dans l'ensemble du présent exposé, il est tantôt fait référence à un paramètre, tantôt à plusieurs. Il faudra comprendre que le singulier comprend le cas du pluriel et *vice et versa*. L'homme du métier saura déterminer le nombre de paramètres nécessaires selon les modes de réalisation souhaités. La seule limitation est la cohérence du procédé dans sa globalité.

Par conséquent, un verre ophtalmique défini par ses paramètres de définition *pdf.l à pdf.r* peut être déterminé à partir de paramètres de conception que l'on peut noter *pcc.1 à pcc. q* où on a :

-

$$pdf.1 = f_{pdf.1}(pcc.1, \ldots, pcc.q) \; ;$$

- ...

-

$$pdf.r = f_{pdf.r}(pcc.1, \ldots, pcc.q) \; ;$$

$f_{pdf.1}$ à $f_{pdf.r}$ étant les fonctions permettant de passer des paramètres de conception aux paramètres de définition correspondants ;
ou encore :

$$PDF = F_{pdf} \cdot PCC \; ;$$

où PCC est l'ensemble des paramètres de conception *pcc.1 à pcc.q* ; $F_{pdf}$ est l'ensemble des fonctions $f_{pdf.1}$ à $f_{pdf.r}$ ; PDF est l'ensemble des paramètres de définition *pcc.1 à pcc.r* ; $F_{pdf} \cdot$ PCC signifie que l'on applique chacune des fonctions de $F_{pdf}$ aux paramètres de PCC. Aucune hypothèse de linéarité n'est effectuée ici.

Par ailleurs, les paramètres de comparaison *pcp.1 à pcp.s* sont déterminés par les paramètres de définition du verre ophtalmique :

-

$$pcp.1 = f_{pcp.1}(pdf.1, \ldots, pdf.r) \; ;$$

- ...

-

$$pcp.s = f_{pcp.s}(pdf.1, \ldots, pdf.r) \; ;$$

$f_{pcp.1}$ à $f_{pcp.s}$ étant les fonctions permettant de passer des paramètres de définition aux paramètres de comparaison correspondants ;

ou encore :

$$PCP = F_{pcp} \cdot PDF = F_{pcp} \cdot F_{pdf} \cdot PCC \; ;$$

où PCP est l'ensemble des paramètres de comparaison *pcp.1 à pcp.s* ; $F_{pcp}$ est l'ensemble des fonctions $f_{pcp.1}$ à $f_{pcp.s}$ ; $F_{pcp} \cdot$ PDF signifie que l'on applique chacune des fonctions de $F_{pcp}$ aux paramètres de PDF. Aucune hypothèse de linéarité n'est effectuée ici.

Le terme « espace » reprend un concept emprunté aux mathématiques et désigne un ensemble de points (définis par un nombre fini de coordonnées) ayant une structure spécifique donnée. Un espace peut comprendre à une ou plusieurs dimensions, notamment 2, 3, 4, 5 ou 6 dimensions, plus généralement 3 dimensions. L'ensemble des coordonnées d'un point de l'espace est appelé « position ».

L'espace est dit « espace de stimuli » car chacune des coordonnées nécessaires pour décrire un point de cet espace est liée à l'un des sens que possède l'être humain.

Un exemple d'espaces de stimuli concerne les stimuli visuels : espaces de couleurs (encore appelés espaces colorimétriques) ou espace de formes avec distance perceptuelle. C'est celui choisi pour la présente invention. Parmi les espaces de couleurs, peuvent être cités : CIE RGB, CIE XYZ, CIE xyY, CIE UVW, CIE U' V' W', CIE L*a*b*, CIE LCH, CIE L*u*v*, teinte/saturation/lumière, et CMYK. Parmi les espaces de formes avec distance perceptuelle, peut être cité celui décrit pas Stefano Berretti et Alberto del Bimbo, « Retrieval by shape similarity with perceptual distance and effective indexing », in Multimedia, IEEE Transactions on, 2000, 2, pp. 225-239.

Un autre exemple d'espaces de stimuli concerne les stimuli auditifs : espaces dont les dimensions sont choisies parmi l'intensité acoustique, la pression acoustique, la fréquence, le timbre.

Une norme peut être définie pour un espace. Cette norme représente la distance séparant deux points de l'espace. La distance, notée $\|AB\|$ ou $\|A - B\|$, la plus usuelle pour un espace à $n$ dimensions entre deux points A et B, respectivement de coordonnées $(a_1, a_2, ..., a_n)$ et $(b_1, b_2, ..., b_n)$ est définie comme suit :

$$\left\|\overrightarrow{AB}\right\| = \sqrt{(a_1 - b_1)^2 + (a_2 - b_2)^2 + ... + (a_n - b_n)^2}$$

On parlera d'espace de stimuli non homogène lorsque deux plus proches positions représentant deux niveaux de stimulus sensoriel qu'un être humain peut discerner sont séparées d'une distance dont la valeur dépend de la zone de l'espace de stimuli dans laquelle les positions sont situées. Les termes « seuil local » employés dans l'ensemble de l'exposé font particulièrement référence à ce cas-là.

Un espace de stimuli peut alternativement être homogène. Cela signifie qu'il a été construit de manière à ce que deux plus proches positions représentant deux niveaux de stimulus sensoriel qu'un être humain peut discerner soient toujours séparées par la même distance. En d'autres termes, tous les seuils locaux sont égaux entre eux : il existe une seule et unique valeur ΔSseuil (appelé seuil de discrimination) pour laquelle si la distance entre deux points de l'espace de stimuli y est inférieure, alors il est considéré que les niveaux de stimuli correspondant à ces deux points ne sont pas discernables par un être humain ; en revanche si la distance entre deux points de l'espace de stimuli y est supérieure ou égale, alors il est considéré que les niveaux de stimuli correspondant à ces points sont discernables par un être humain. Ces espaces de stimuli homogènes sont préférés car plus facile à mettre en oeuvre.

De manière générale, les espaces de stimuli ne sont pas homogènes. Par exemple, l'oeil humain n'est pas sensible de la même manière à l'ensemble des longueurs d'onde. En effet, il est plus sensible aux longueurs d'onde correspondant aux couleurs vert/jaune. Autre exemple, l'oreille humaine ne discrimine pas les fréquences de manière linéaire, mais de manière logarithmique.

Un espace de stimuli homogène peut néanmoins être créé à partir d'un espace de stimuli non homogène. Pour cela, on utilise un seuil de discrimination ΔSseuil. Cela signifie que deux niveaux de stimulus qui diffèrent en deçà de ce seuil sont considérés comme ne pouvant pas être distingués par l'homme, alors que deux niveaux de stimulus différant en delà de ce seuil sont considérés comme pouvant être distingués par l'homme. Ce seuil de discrimination ne correspond pas à une même distance sur l'ensemble de l'espace de stimuli. Il permet de mailler l'espace de stimuli nonhomogène de manière à ce que deux noeuds du maillage adjacent soient séparés d'une distance correspondant au seuil de discrimination. Puis à partir de ce maillage, un espace de stimuli homogène est créé en imposant une distance constante entre les noeuds du maillage, on parle de linéarisation.

Un exemple d'une telle linéarisation d'un espace de stimuli est celui d'un espace de couleurs. Plusieurs normes définissent une distance colorimétrique entre deux couleurs notée ΔE en fonction de plusieurs paramètres donc les supports utilisés pour la représentation des couleurs (papier, écran, encre...) : normes CIE 1976, CIE 1994, CIE 2000 (ces trois premières pour la représentation sur écran) et CMC (pour les encres par rapport à l'éclairage). Un exemple de linéarisation de l'espace de couleur est donné plus loin.

*Procédé*

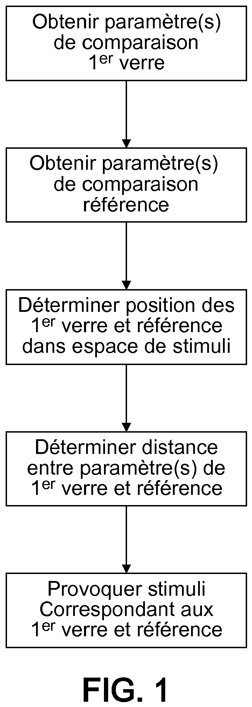

Un procédé, notamment implémenté par ordinateur, pour l'aide à la détermination du niveau de différence entre un premier verre ophtalmique et une référence ophtalmique caractérisés par un ou plusieurs paramètres de comparaison est exposé plus en détail ici en référence aux figures 1 à 4.

Ce procédé comprend notamment les étapes consistant à :

a) obtenir le ou les paramètres de comparaison correspondant au premier verre ophtalmique et celui ou ceux correspondant à la référence ophtalmique ;

b) déterminer la position du premier verre ophtalmique et de la référence ophtalmique dans un espace de stimuli en associant le ou les paramètres de comparaison à un point de l'espace de stimuli.

Chaque position de l'espace de stimuli correspond à un niveau de stimulus sensoriel.

Le procédé comprend en outre l'étape consistant à :

c) déterminer une différence entre les paramètres de comparaison du premier verre ophtalmique et de la référence ophtalmique.

L'association du ou des paramètres de comparaison d'un verre ophtalmique ou d'une référence ophtalmique à un point de l'espace de stimuli est définie de manière à ce que :

- si une première position et une deuxième position dans l'espace de stimuli correspondent à deux niveaux de stimulus sensoriel qu'un utilisateur à qui les stimuli sont destinés peut distinguer sensoriellement, alors la distance entre les paramètres de comparaison à partir desquels la première position est déterminée et les paramètres de comparaison à partir desquels la deuxième position est déterminée est supérieure à un seuil local ; et

- sinon la distance entre les paramètres de comparaison à partir desquels la première position est déterminée et les paramètres de comparaison à partir desquels la deuxième position est déterminée est inférieure à un seuil local.

L'association du ou des paramètres de comparaison à un point de l'espace de stimuli permet d'indiquer à l'utilisateur de manière simple et instinctive si le premier verre ophtalmique est différent de la référence ophtalmique.

En d'autres termes, soit $\Delta$Sseuil la distance minimale entre deux niveaux de stimuli qu'un utilisateur peut distinguer et $\Delta$D le seuil local ; alors, l'association peut être résumée de la manière suivante :

$$\begin{cases} \|S_1 - S_2\| \geq \Delta S seuil \Leftrightarrow \|PCP_1 - PCP_2\| \geq \Delta D \\ \|S_1 - S_2\| < \Delta S seuil \Leftrightarrow \|PCP_1 - PCP_2\| < \Delta D \end{cases},$$

avec $S_1$ et $S_2$ les niveaux de stimulus sensoriel correspondant respectivement une première position et une deuxième position (on peut encore qualifié $\|S_1 - S_2\|$ de distance entre les deux niveaux de stimulus sensoriel dans l'espace de stimuli ; et $\|PCP_1 - PCP_2\|$ la distance entre les paramètres de comparaison associés à la première position et les paramètres de comparaison associés à la deuxième position.

L'espace de stimuli n'étant pas nécessairement homogène, le seuil peut dépendre de la région de l'espace dans laquelle les positions correspondant aux verres ophtalmiques se situent. C'est pourquoi le seuil est qualifié de seuil local.

De manière générale, le premier verre ophtalmique et la référence ophtalmique sont dit différents si un porteur moyen de verres ophtalmique peut déceler une différence dans les propriétés géométriques du premier verre ophtalmique par rapport à un verre ophtalmique théorique pouvant être obtenue à partir de la référence ophtalmique, telles que les propriétés mentionnées ci-dessus en ce qui concerne les paramètres de comparaison. Il convient de noter qu'il n'est pas nécessaire que le porteur moyen fasse l'expérience de l'observation du premier verre ophtalmique ou à travers celui-ci car celui-ci est déjà une abstraction. Les seuils de discrimination d'un paramètre du porteur moyen peuvent être déterminés par un modèle issu de mesures de discrimination réalisées avec un échantillon de porteurs représentatif. Le porteur moyen peut alors désigner un porteur théorique dont les seuils de discrimination sont égaux aux seuils du modèle. Dans un autre mode de réalisation, le porteur moyen désigne un porteur réel dont les seuils de discrimination sont proches de ceux du modèle.

Dans la présente invention, l'étape a) peut comprendre différent ensemble d'étapes, parmi lesquels :

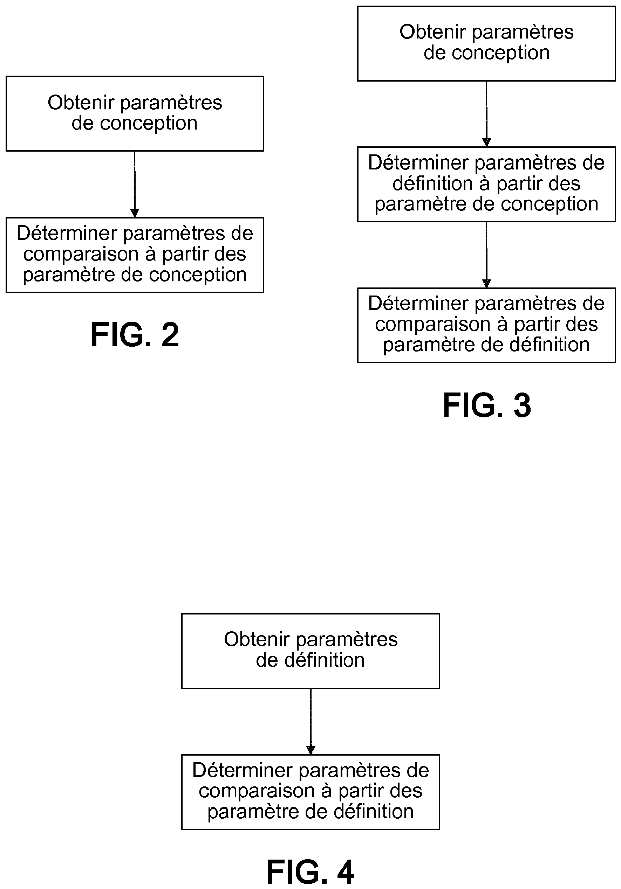

- obtenir des paramètres de conception du premier verre ophtalmique, à déterminer des paramètres de définition du premier verre ophtalmique directement à partir des paramètres de conception du premier verre ophtalmique, et à déterminer les paramètres de comparaison du premier verre ophtalmique directement à partir des paramètre de conception du premier verre ophtalmique (figure 3)

Dans chacun des cas illustrés par les figures 2, 3 et 4, les paramètres de définition du premier verre ophtalmique peuvent être déterminés ou obtenus à partir d'un verre ophtalmique correspondant au premier verre ophtalmique, le cas échéant déterminé à partir des paramètres de conception du premier verre ophtalmique.

De préférence, le premier verre ophtalmique est un verre ophtalmique personnalisé. C'est-à-dire un verre ophtalmique déterminé ou déterminable à partir de mesure de paramètres de conception associés au porteur ; c'est-à-dire que les paramètres de conception sont mesurés sur le porteur ou déterminer à partir du comportement de celui-ci, ou encore à partir d'une auto-évaluation. Pour cela, l'étape consistant à obtenir les paramètres de conception du premier verre ophtalmique comprend l'étape consistant à mesurer des paramètres de conception du premier verre ophtalmique qui sont associés au porteur. Alternativement, l'étape consistant à obtenir les paramètres de conception du premier verre ophtalmique comprend l'étape consistant à récupérer les paramètres de conception dans une base de données de premiers verres ophtalmiques.

Par ailleurs, l'étape consistant à obtenir des paramètres de définition du premier verre ophtalmique peut comprendre l'étape consistant à récupérer les paramètres de définition dans une base de données de premiers verres ophtalmiques.

L'étape consistant à obtenir les paramètres de comparaison de la référence ophtalmique peut comprendre l'étape consistant à retirer les paramètres de comparaison d'une banque de données de références ophtalmiques ; ou

- obtenir des paramètres de conception d'un deuxième verre ophtalmique faisant office de référence ophtalmique, à déterminer des paramètres de définition du deuxième verre ophtalmique directement à partir des paramètres de conception du deuxième verre ophtalmique, et à déterminer les paramètres de comparaison de la référence ophtalmique directement à partir des paramètre de conception du deuxième verre ophtalmique ; ou

- obtenir des paramètres de définition d'un deuxième verre ophtalmique faisant office de référence ophtalmique et à déterminer des paramètres de comparaison de la référence ophtalmique directement à partir des paramètres de définition du deuxième verre ophtalmique.

Comme pour le cas du premier verre ophtalmique, dans chacun des cas mentionnés ci-dessus les paramètres de définition du deuxième verre ophtalmique peuvent être déterminés ou obtenus à partir d'un verre ophtalmique correspondant au deuxième verre ophtalmique, le cas échéant ce dernier est déterminé à partir des paramètres de conception du deuxième verre ophtalmique.

De préférence, le deuxième verre ophtalmique est un verre ophtalmique personnalisé. C'est-à-dire un verre ophtalmique déterminé ou déterminable à partir de mesure de paramètres de conception associés au porteur. Pour cela, l'étape consistant à obtenir les paramètres de conception du deuxième verre ophtalmique comprend l'étape consistant à mesurer des paramètres de conception du deuxième verre ophtalmique qui sont associés au porteur. Alternativement, l'étape consistant à obtenir les paramètres de conception de la référence ophtalmique comprend l'étape consistant à récupérer les paramètres de conception dans une base de données de références ophtalmiques.

Dans un autre mode de réalisation, le procédé permet de comparer deux verres ophtalmiques personnalisés, chacun déterminé à partir de paramètres de conception d'un verre ophtalmique. Ceci correspond au cas où l'on souhaite comparait deux types de verres ophtalmiques différents, par exemple deux verres ophtalmiques déterminer grâce à deux méthodes différentes ; ou encore deux verres ophtalmiques obtenus à partir de deux mesures successives.

Les paramètres de conception utilisés pour le premier verre ophtalmique ne sont pas nécessairement les mêmes que les paramètres de conception utilisés pour le deuxième verre ophtalmique.

Dans le cas où l'obtention des paramètres de comparaison de la référence ophtalmique ne comprend pas les étapes correspondant à aucune des figures 2, 3 ou 4, il est possible de comparer aisément particulièrement le premier verre ophtalmique déterminé selon les paramètres de conception liés au porteur et donc qui lui est personnalisé et un verre ophtalmique non personnalisé afin de déterminer si la personnalisation a un sens ou de faire prendre conscience au porteur que la personnalisation apporterait un confort accru au porteur.

Dans ce cas, les paramètres de comparaison de la référence ophtalmique peuvent être déterminés à partir soit des paramètres de conception correspondant à la référence ophtalmique, soit des paramètres de définition de celui-ci.

Le procédé permet encore de déterminer si une imprécision de mesure d'un ou de plusieurs paramètres de conception associés au porteur a un impact significatif sur le verre ophtalmique. Pour cela, les étapes d'obtention des sets de paramètres de conception peuvent être réalisées par deux mesures successives des paramètres de conception associés au porteur.

Ainsi, si $\delta PCC$ représente les imprécisions de mesure, nous avons, en supposant l'hypothèse de linéarité au premier ordre :

$$PCC_2 = PCC_1 + \delta PCC \ ;$$

et donc :

$$PCP_2 = F_{pcp} \cdot F_{pdf} \cdot PCC_2 \, ;$$

$$= F_{pcp} \cdot F_{pdf} \cdot (PCC_1 + \delta PCC) \, ;$$

$$= F_{pcp} \cdot F_{pdf} \cdot PCC_1 + F_{pcp} \cdot F_{pdf} \cdot \delta PCC) \, ;$$

$$= PCP_2 + \delta PCP \, ;$$

où $\delta PCP$ représente l'impact des imprécisions de mesure sur les paramètres de comparaison.

Donc nous avons :

- si $\|\delta PCP\| \geq \Delta D$, alors $\|S_1 - S_2\| \geq \Delta Sseuil$ et l'utilisateur percevra une différence entre les deux niveaux de stimulus ;
- sinon, $\|S_1 - S_2\| < \Delta Sseuil$ et l'utilisateur ne percevra pas de différence entre les deux niveaux de stimulus.

Au niveau de l'utilisateur, celui percevra ou non une différence entre les deux niveaux de stimulus. S'il en perçoit une alors $\|\delta PCP\| \geq \Delta D$ et il saura que l'imprécision de la mesure a une influence significative sur les paramètres de comparaison des verres ophtalmiques.

Avantageusement, le procédé peut en outre comprendre l'étape d) consistant à provoquer le stimulus sensoriel correspondant au premier verre ophtalmique et celui correspondant à la référence ophtalmique. Cette étape est réalisée en utilisant les outils adéquats selon la nature du stimulus. Par exemple, pour un espace de couleur, l'étape d) peut consister à l'affichage d'une première couleur correspondant à la position du premier verre ophtalmique et d'une deuxième couleur correspondant à la position de la référence ophtalmique.

Dans le cas où l'espace de stimuli est un espace de couleurs, le procédé peut comprendre en outre l'étape consistant à sélectionner un domaine chromatique à l'intérieur de l'espace de couleurs.

Les termes « domaine chromatique » désignent soit un ou plusieurs champs chromatiques, notamment les champs chromatiques de la langue française.

Ceci permet par exemple d'adapter l'espace de stimuli à la capacité visuelle de l'utilisateur (par exemple les dychromatopsies telles que l'achromatopsie, la deutéranopie, la deutéranomalie, la protanopie, la protanomalie, la trinatopie ou la tritanomalie) ou encore à ses préférences.

Le procédé peut encore en outre comprendre l'étape consistant à ajuster :

- le niveau de stimulus sensoriel à la sensibilité de l'utilisateur au stimulus sensoriel ; ou
- le seuil local à la capacité du porteur à distinguer les propriétés du premier verre ophtalmique et celles de la référence ophtalmique.

Dans le cas où il n'y a pas d'ajustement, un « utilisateur normal » est pris comme référence. Les seuils de discrimination de niveaux de stimulus sensoriel d'un utilisateur normal peuvent être déterminés par un modèle issu de mesures de discrimination réalisées avec un échantillon représentatif d'utilisateurs ne présentant pas d'anomalie ophtalmique. L'utilisateur normal peut alors désigner un utilisateur théorique dont les seuils de discrimination sont égaux aux seuils du modèle. Dans un autre mode de réalisation, l'utilisateur normal désigne un utilisateur réel dont les seuils de discrimination sont proches de ceux du modèle.

Le présent procédé permet en outre la quantification intuitive de la différence entre le premier verre ophtalmique et la référence ophtalmique. En effet, plus les stimuli sensoriels sont perçus comme étant différents par l'utilisateur et plus la différence entre le premier verre ophtalmique et la référence ophtalmique sera grande.

Système

Un système **1** pour l'aide à la détermination du niveau de différence entre un premier verre ophtalmique et une référence ophtalmique caractérisés par un ou plusieurs paramètres de comparaison est exposé plus en détail ici en référence à la figure 15.

Ce système **1** comprend :

- une interface **11** d'acquisition de paramètres correspondant à un verre ophtalmique ou à une référence ophtalmique ;
- un convertisseur **12** pour associer les paramètres de comparaison correspondant au premier verre ophtalmique à une première position dans un espace de stimuli et ceux correspondants à la référence ophtalmique à une deuxième position de l'espace de stimuli ;
- un calculateur **13** pour déterminer une distance entre les paramètres du premier verre ophtalmique et ceux de la référence ophtalmique ;

le convertisseur **12** étant adapté pour effectuer une association telle que définie ci-dessus dans la description du procédé.

L'interface **11** d'acquisition est reliée au convertisseur **12** et au calculateur **13**. Elle peut être adaptée pour permettre l'entrée des paramètres parmi : des paramètres de conception, des paramètres de définition, des paramètres de comparaison. Selon les modes de réalisation, il n'est pas nécessaire que l'interface **11** d'acquisition soit adaptée pour permettre l'entrée de tous ces types de paramètres. Elle peut être adaptée pour permettre l'entrée que d'un, de deux ou des trois types mentionnés ci-dessus.

Le calculateur **13** est relié au convertisseur **12** et peut en outre être adapté pour déterminer les paramètres appartenant à un des types mentionnés ci-dessus à partir de paramètres d'un autre type, et notamment :

- des paramètres de comparaison directement à partir de paramètres de définition ; et
- des paramètres de définition directement à partir de paramètres de conception.

Le calculateur **13** peut aussi être adapté pour déterminer des paramètres de définition ou des paramètres de comparaison à partir d'un verre ophtalmique.

Le calculateur **13** peut aussi être adapté pour déterminer un verre ophtalmique à partir de paramètre de conception.

Le système **1** peut en outre comprendre un récupérateur **14** adapté pour récupérer des paramètres à partir d'une banque de données de verres ophtalmiques et/ou de références ophtalmiques. Le récupérateur **14** peut être adapté pour récupérer des paramètres parmi : des paramètres de conception, des paramètres de définition, des paramètres de comparaison. Selon les modes de réalisation, il n'est pas nécessaire que le récupérateur **14** soit adapté pour permettre la récupération de tous ces types de paramètres. Elle peut être adaptée pour permettre la récupération que d'un, de deux ou des trois types mentionnés ci-dessus.

Le système peut encore comprendre un ou plusieurs instruments de mesure **15** adaptés à la mesure de paramètre de conception et relié à l'interface **11** d'acquisition.

Avantageusement, le système peut en outre comprendre un déclencheur **16** de stimuli pour provoquer des stimuli sensoriels et relié au convertisseur **12**.

Dans le cas de stimuli visuels, le déclencheur **16** de stimuli peut être un écran (rétroéclairé ou pour projection), un support imprimé tel que papier ou tissu..., une LED RGB permettant une modulation spectrale de son éclairage. Dans le cas où l'espace de stimuli est un espace de couleurs, le système peut comprendre en outre un sélectionneur **17** de domaine chromatique relié au convertisseur **12**.

Dans le cas de stimuli auditifs, le déclencheur de stimuli peut être un hautparleur.

Le système peut en outre comprendre un ajusteur **18** de niveau de stimulus sensoriel et/ou un ajusteur de seuil local relié soit au convertisseur **12** soit au déclencheur **16** de stimuli.

Exemple 1

Le présent exemple est fondé sur un procédé de personnalisation d'un verre ophtalmique, autrement un procédé de détermination d'un verre ophtalmique personnalisé, notamment un système optique d'un verre progressif tel que décrit dans le document WO 2015/067877. Dans ce procédé, un verre ophtalmique personnalisé est défini à partir de paramètres de conception obtenus par mesure en vision de près sur et par le porteur, à savoir :

- l'angle d'abaissement du regard (ci-après abaissement) traduisant la posture du porteur lors d'une tâche de lecture ou une tâche proche de celle-ci ;
- l'aptitude à bouger les yeux lors de la tâche de lecture ou de la tâche proche de celle-ci traduisant le comportement du porteur (également nommé ratio NVB et défini de manière à être compris entre 0 et 1).

Des exemples de méthodes pour obtenir ces paramètres sont décrits dans le document mentionné ci-dessus.

Ce procédé de personnalisation permet de déterminer tout d'abord un paramètre LP100% et ensuit un paramètre LP85%$_{LP100\%}$, utilisant LP100% comme entrée. LP100% est utilisé comme un premier paramètre de comparaison.

En particulier, LP100% est obtenu à partir de la fonction de transfert suivante :

$$LP100\% = 14 + \frac{4}{1 + \exp\left[-\left(LP_{NVB} - 10,5\right)^{0,7}\right]}$$

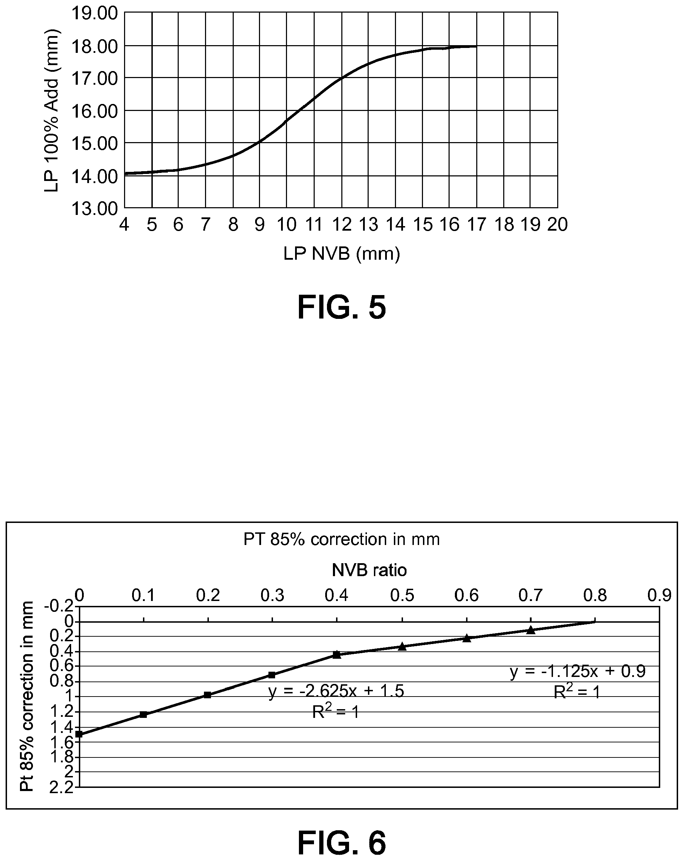

avec $LP_{NVB}$ un paramètre déterminé à partir de l'abaissement en vision de près en effectuant un tracé de rayon sur le verre sans effet prismatique non personnalisé pour déterminer le point d'impact sur la face avant du verre de la direction de regard à l'angle d'abaissement en vision de près $\alpha_{NV}$. La courbe est illustrée sur la figure 5.

Un deuxième paramètre de comparaison ΔLP85% définit par ΔLP85% = LP85%$_{LP100\%}$ - LP85%, LP85% étant défini par la fonction de transfert suivante :

$$\begin{cases} \text{NVB} \le 0.4 \Rightarrow \text{LP85\%} = \text{LP85\%}_{LP100\%} - 2.625 \times \text{NVB} + 1.5 \\ 0.4 < \text{LP}_{NVB} \le 0.8 \Rightarrow \text{LP85\%} = \text{LP85\%}_{LP100\%} - 1.125 \times \text{NVB} + 0.9 \\ 0.8 < \text{NVB} \Rightarrow \text{LP85\%} = \text{LP85\%}_{LP100\%} \\ \text{LP85\%}_{LP100\%@14mm} > \text{LP85\%} \Rightarrow \text{LP85\%} = \text{LP85\%}_{LP100\%@14mm} \end{cases},$$

dont la courbe est donnée sur la figure 6.

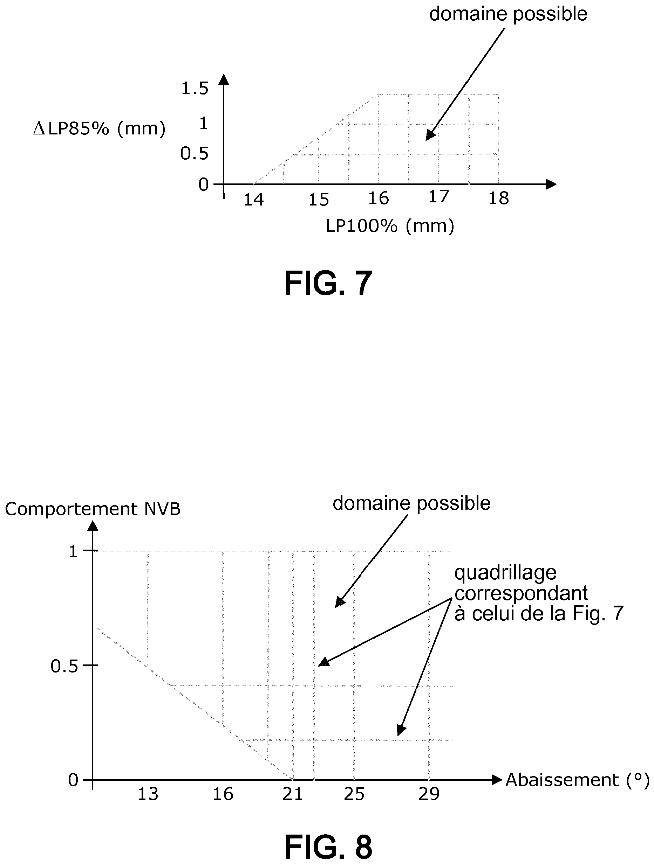

La figure 7 illustre ainsi le domaine possible pour les couples LP100% et LP85%.

On considère généralement qu'une différence de LP100% ou ΔLP85% supérieure à 0,5mm est suffisante pour être perçu par le porteur. De plus, 0,5mm est la précision standard utilisée aujourd'hui par les professionnels de la santé visuelle lorsqu'ils prescrivent une LP100%. C'est pourquoi le quadrillage effectué sur la figure 7 présente un pas de 0,5 mm en abscisses et ordonnées ; ce quadrillage n'était effectué que dans le domaine possible. Sur le graphe de la figure 7, LP100% est pris entre 14 mm et 18 mm, ce qui correspond à la majorité des cas utilisés aujourd'hui lors de la détermination de verre ophtalmique progressif. ΔLP85% est représenté entre 0 et 1,5 qui sont les valeurs possiblement obtenues à partir des valeurs de LP100% entre 14 et 18 mm.

En appliquant les relations vues précédemment, le quadrillage de la figure 7 peut être retranscrit sur un graphe des couples abaissement/comportement, comme illustré sur la figure 8. On constate aisément que le quadrillage régulier de la figure 7 ne l'est plus une fois la retranscription effectuée.

Un espace de couleur est utilisé comme espace de stimuli, notamment un espace de couleurs CIE. La norme CIE 2000 définit la distance colorimétrique ΔE2000 et l'interprétation du seuil de perception des couleurs de ΔE2000 est :

- ΔE2000 = 1 est le seuil de perception entre deux couleurs pour un expert ;
- ΔE2000 = 2 est le seuil de restitution des couleurs des meilleurs écrans de tablette actuellement sur le marché tel que l'iPad Air™ ;
- si ΔE2000 = 3 alors une personne moyenne remarquera à peine la différence ;
- si ΔE2000 = 5-7 alors une personne moyenne distinguera les couleurs mais de manière inconsistante ;
- si ΔE2000 > 10 alors la distance entre les deux couleurs est évidente pour une personne moyenne.

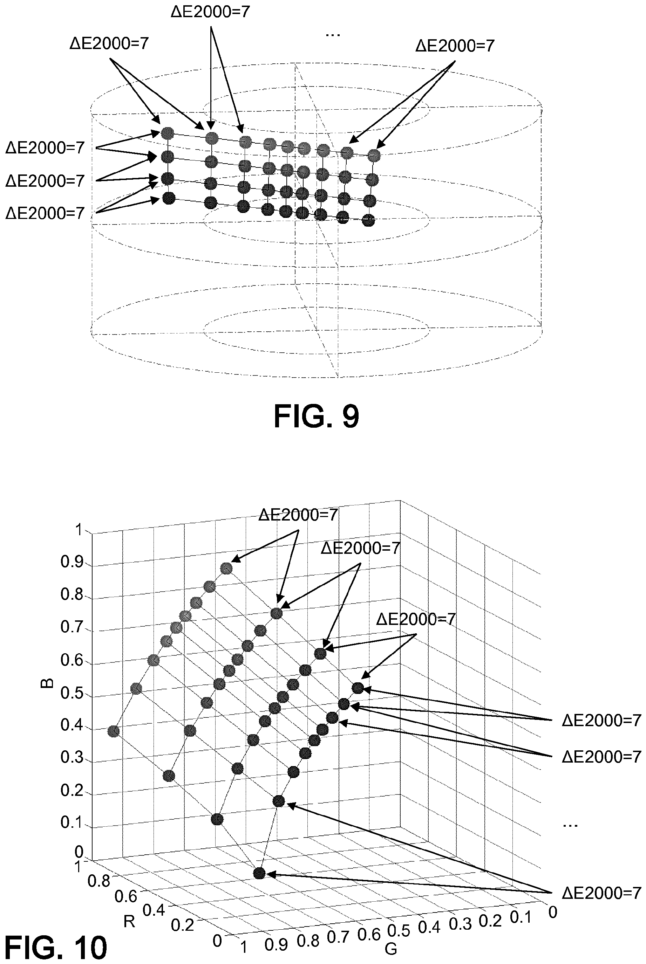

Dans l'espace de couleurs CIE L*a*b* ou CIE LCH représente une couleur est représentée par sa luminance, sa chrominance et sa clarté. Dans une première mise en oeuvre de cet exemple, ΔE2000 = 7 est pris comme ΔSseuil. Ainsi, un maillage de l'espace de couleurs est réalisé de manière à ce que chaque noeud du maillage soit séparé de ses plus proches voisins par ΔSseuil tel qu'illustré par la figure 9. Ce maillage peut être ensuite retranscrit dans un autre espace de couleurs, tel que l'espace de couleurs RGB généralement utilisé pour les écrans (figure 10).

Par la suite, l'espace de couleurs peut être transformé pour que le maillage devienne uniforme, c'est-à-dire que si l'on prend deux points de l'espace séparés de ΔEseuil, alors ces deux points sont séparés d'une distance minimale qui est la même pour tout couple de points.

Par linéarisation dans l'espace CIELab, il est possible d'obtenir une continuité de couleur pour les 2 axes.

Cette charte graphique peut être alors appliquée aux graphiques des figures 7 et 8 de sorte que les noeuds du maillage de l'espace de couleurs correspondent aux intersections du quadrillage des graphes représentés sur les figures 7 et 8.

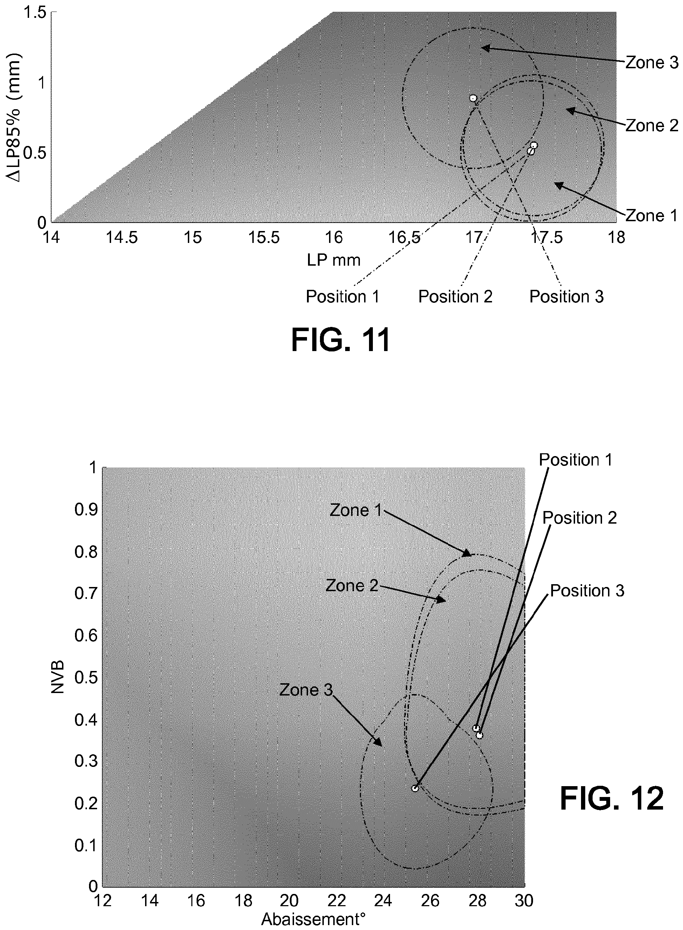

Sur la figure des couples LP100%/ΔLP85%, à partir d'un point correspondant à un couple, peut être tracée une zone dans laquelle tous les couples de points pris à l'intérieure de celle-ci sont considérés comme correspondant à des verres ophtalmiques non significativement différents en ce qui concernent les paramètres LP100% et ΔLP85% (figure 11), c'est-à-dire que la distance entre les paramètres de conception correspondant à ces points est inférieur au seuil local. On constate que ces zones sont circulaires, ce qui traduit que l'espace de couleur utilisé est bien homogénéisé ou encore linéarisé. Cette zone peut être retranscrite sur la figure des couples abaissement/comportement (figure 12). Ainsi, on constate que ces zones ne sont plus circulaires.

Exemple 2

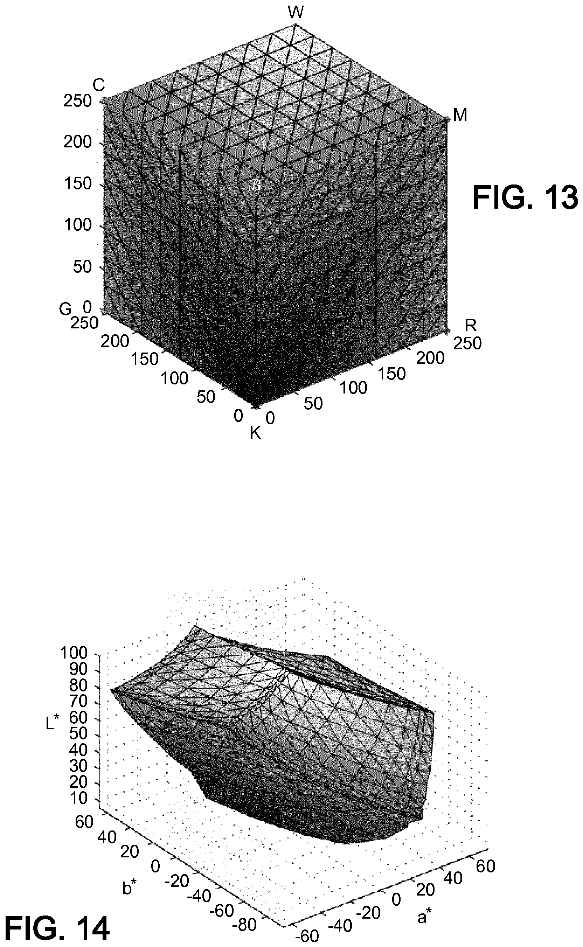

Les résultats peuvent être affichés sur différents supports, notamment un écran. Il faudra alors veiller adapter le domaine chromatique au support. Par exemple, en ce qui concerne les écrans, l'espace de couleurs est encodé dans l'espace RGB sur 8 bits et non CIE L*a*b* ou LCH. Ainsi, il faudra prendre soin à ce que le maillage des couleurs effectué

EP 3 244 255 B1

sur l'espace CIE L*a*b* ou LCH est bien inclus dans l'espace RGB. Les figures 13 et 14 illustrent l'inclusion de l'espace RGB dans l'espace CIE L*a*b*.

**Revendications**

1. Système de détermination du niveau de différence entre deux verres ophtalmiques **caractérisés par** un ou plusieurs paramètres de comparaison, les paramètres de comparaison sont sélectionnés parmi les paramètres reflétant un ou plusieurs des propriétés suivantes : propriétés géométriques, optiques, mécaniques, de confort et esthétiques des verres ophtalmiques, comprenant :

   - une interface (11) d'acquisition de paramètres correspondant à un verre ophtalmique destiné à être porté par un futur porteur et à une référence ophtalmique ;
   - un convertisseur (12) configuré pour associer les paramètres de comparaison correspondant au premier verre ophtalmique à une première position dans un espace de stimuli et ceux correspondants à la référence ophtalmique à une deuxième position de l'espace de stimuli, et relié à l'interface (11) d'acquisition, chaque point de l'espace de stimuli correspondant à un niveau de stimulus sensoriel, le stimulus sensoriel étant un stimulus visuel et l'espace de stimuli étant un espace de couleurs, préférentiellement choisi parmi CIE RGB, CIE XYZ, CIE xyY, CIE UVW, CIE U'V'W', CIE L*a*b*, CIE LCH, CIE L*u*v* ;
   - un calculateur (13) configuré pour déterminer une distance entre les paramètres de comparaison du premier verre ophtalmique et ceux de la référence ophtalmique, et relié à l'interface (11) d'acquisition et au convertisseur (12), où les paramètres de comparaisons sont déterminés à partir de paramètres de définition du premier verre ophtalmique et de la référence ophtalmique, et où les paramètres de définition du premier verre ophtalmique sont déterminés à partir de paramètres de conception mesurés sur le porteur ;

   le convertisseur (12) étant adapté pour associer le ou les paramètres de comparaison d'un verre ophtalmique à un point de l'espace de stimuli de manière à ce que :

   - si une première position et une deuxième position dans l'espace de stimuli correspondent à deux niveaux de stimulus sensoriel qu'un utilisateur à qui les stimuli sont destinés peut distinguer sensoriellement, alors la distance entre les paramètres de comparaison à partir desquels la première position est déterminée et les paramètres de comparaison à partir desquels la deuxième position est déterminée est supérieure à un seuil local et l'utilisateur est capable de déceler une différence dans les propriétés géométriques du premier verre ophtalmique ($V_1$) par rapport à la référence ophtalmique ($V_{ref}$) à travers le verre, de sorte que plus les stimuli sensoriels sont perçus comme étant différents par l'utilisateur et plus la différence entre le premier verre ophtalmique et la référence ophtalmique est grande ; et
   - sinon la distance entre les paramètres de comparaison à partir desquels la première position est déterminée et les paramètres de comparaison à partir desquels la deuxième position est déterminée est inférieure à un seuil local et l'utilisateur n'est pas capable de déceler une différence dans les propriétés géométriques du premier verre ophtalmique ($V_1$) par rapport à la référence ophtalmique ($V_{ref}$).

2. Système selon la revendication 1, comprenant en outre un déclencheur (16) de stimuli pour provoquer des stimuli sensoriels et relié au convertisseur (12).

3. Procédé de détermination du niveau de différence entre un premier verre ophtalmique ($V_1$), destiné à être porté par un futur porteur, et une référence ophtalmique ($V_{ref}$) **caractérisés par** un ou plusieurs paramètres de comparaison ($PCP(V_1)$ ; $PCP(V_{ref})$), les paramètres de comparaison étant sélectionnés parmi les paramètres reflétant une ou plusieurs des propriétés suivantes :

   propriétés géométriques, optiques, mécaniques, de confort et esthétiques du premier verre ophtalmique et de la référence ophtalmique,
   le procédé étant implémenté par le système selon la revendication 1 ou la revendication 2,
   le procédé comprenant les étapes consistant à :

   - obtenir le ou les paramètres de comparaison ($PCP(V_1)$) correspondant au premier verre ophtalmique ($V_1$) ;
   - déterminer la position ($S_1$) du premier verre ophtalmique ($V_1$) dans l'espace de stimuli (ESS) en associant le ou les paramètres de comparaison ($PCP(V_1)$) du premier verre ophtalmique à un point de l'espace de stimuli (ESS),

- obtenir le ou les paramètres de comparaison ($PCP(V_{ref})$) correspondant à la référence ophtalmique ($V_{ref}$) ;
- déterminer la position ($S_{ref}$) de la référence ophtalmique ($V_{ref}$) dans l'espace de stimuli (ESS) en associant le ou les paramètres de comparaison ($PCP(V_{ref})$) de la référence ophtalmique à un point de l'espace de stimuli (ESS) ;
- déterminer une distance ($\|PCP_1 - PCP_2\|$) entre le ou les paramètres de comparaison ($PCP(V_1)$) du premier verre ophtalmique et le ou les paramètres de comparaison ($PCP(V_{ref})$) de la référence ophtalmique;

dans lequel l'association du ou des paramètres de comparaison d'un verre ophtalmique ou d'une référence ophtalmique à un point de l'espace de stimuli est définie de manière à ce que :

- si la position ($S_1$) du premier verre ophtalmique ($V_1$) et la position ($S_{ref}$) de la référence ophtalmique ($V_{ref}$) dans l'espace de stimuli (ESS) correspondent à deux niveaux de stimulus sensoriel qu'un utilisateur à qui les stimuli sont destinés peut distinguer sensoriellement, alors la distance ($\|PCP_1 - PCP_2\|$) est supérieure à un seuil local et l'utilisateur est capable de déceler une différence dans les propriétés géométriques du premier verre ophtalmique ($V_1$) par rapport à la référence ophtalmique ($V_{ref}$) à travers le verre de sorte que plus les stimuli sensoriels sont perçus comme étant différents par l'utilisateur et plus la différence entre le premier verre ophtalmique et la référence ophtalmique est grande ;
- sinon la distance ($\|PCP_1 - PCP_2\|$) est inférieure à un seuil local et l'utilisateur n'est pas capable de déceler une différence dans les propriétés géométriques du premier verre ophtalmique ($V_1$) par rapport à la référence ophtalmique ($V_{ref}$),

dans lequel l'étape consistant à obtenir les paramètres de comparaison du premier verre ophtalmique comprend les étapes consistant à :

- obtenir des paramètres de conception du premier verre ophtalmique, à déterminer des paramètres de définition du premier verre ophtalmique directement à partir des paramètres de conception du premier verre ophtalmique, et à déterminer les paramètres de comparaison du premier verre ophtalmique directement à partir des paramètre de définition du premier verre ophtalmique ; ou

dans lequel l'étape consistant à obtenir les paramètres de conception du premier verre ophtalmique comprend l'étape consistant à mesurer des paramètres de conception qui sont associés au porteur.

**4.** Procédé selon la revendication 3, dans lequel le ou les paramètres de comparaison sont choisis parmi :

LP100%, décalage latéral en vision de près par rapport à la croix de montage en vision de loin, largeur de champs, épaisseur du verre ophtalmique en au moins un point, poids du verre ophtalmique, matière du verre ophtalmique, coloration du verre ophtalmique, type de revêtement, un niveau d'aberration optique en au moins un point, un niveau de contraste/acuité en au moins un point, un niveau de grossissement en au moins un point, un niveau de transmission en au moins un point, un niveau de teinte en au moins un point, et niveau et type de traitement,
LP100% étant la longueur de progression définie par une distance verticale entre une croix de montage et un point d'intersection de la direction de regard correspondant à une direction de regard en vision de près avec le plan du verre et où, le long de la méridienne, le porteur perçoit une puissance équivalente à la puissance en vision de loin augmentée de 100% de l'addition prescrite ;
dans lequel le procédé comprend les étapes consistant à :

- obtenir le ou les paramètres de comparaison ($PCP(V_1)$) correspondant au premier verre ophtalmique ($V_1$) ;
- déterminer la position ($S_1$) du premier verre ophtalmique ($V_1$) dans un espace de stimuli (ESS) visuels ou auditifs en associant le ou les paramètres de comparaison ($PCP(V_1)$) du premier verre ophtalmique à un point de l'espace de stimuli (ESS), chaque point de l'espace de stimuli correspondant à un niveau de stimulus visuel ou auditif ;
- obtenir le ou les paramètres de comparaison ($PCP(V_{ref})$) correspondant à un deuxième verre ophtalmique ($V_2$) ;
- déterminer la position ($S_2$) de la référence ophtalmique ($V_2$) dans l'espace de stimuli (ESS) visuels ou auditifs en associant le ou les paramètres de comparaison ($PCP(V_2)$) du deuxième verre ophtalmique à un point de l'espace de stimuli (ESS) ;
- déterminer une distance ($\|PCP_1 - PCP_2\|$) entre le ou les paramètres de comparaison ($PCP(V_1)$) du premier verre ophtalmique et le ou les paramètres de comparaison ($PCP(V_2)$) du deuxième verre ophtalmique ;

dans lequel l'association du ou des paramètres de comparaison d'un verre ophtalmique ou d'une référence ophtalmique à un point de l'espace de stimuli est définie de manière à ce que :

$$\begin{cases} \|S_1 - S_2\| \geq \Delta Sseuil \Leftrightarrow \|PCP_1 - PCP_2\| \geq \Delta D \\ \|S_1 - S_2\| < \Delta Sseuil \Leftrightarrow \|PCP_1 - PCP_2\| < \Delta D \end{cases}$$

où $\Delta$Sseuil est la distance minimale entre deux niveaux de stimuli qu'un utilisateur peut distinguer et $\Delta D$ un seuil local.

5. Procédé selon la revendication 3, comprenant en outre l'étape consistant à provoquer les stimuli sensoriels correspondant au premier verre ophtalmique et à la référence ophtalmique.

6. Procédé selon l'une des revendications précédentes, dans lequel l'étape consistant à obtenir les paramètres de comparaison de la référence ophtalmique comprend les étapes consistant à :

- retirer les paramètres de comparaison d'une banque de données de références ophtalmiques ; ou
- obtenir des paramètres de conception d'un deuxième verre ophtalmique faisant office de référence ophtalmique et à déterminer des paramètres de comparaison de la référence ophtalmique à partir des paramètres de conception du deuxième verre ophtalmique ; ou
- obtenir des paramètres de conception d'un deuxième verre ophtalmique faisant office de référence ophtalmique, à déterminer des paramètres de définition du deuxième verre ophtalmique à partir des paramètres de conception du deuxième verre ophtalmique, et à déterminer les paramètres de comparaison de la référence ophtalmique à partir des paramètre de définition du deuxième verre ophtalmique ; ou
- obtenir des paramètres de définition d'un deuxième verre ophtalmique faisant office de référence ophtalmique et à déterminer des paramètres de comparaison de la référence ophtalmique à partir des paramètres de définition du deuxième verre ophtalmique.

7. Procédé selon la revendication 6, dans lequel l'étape consistant à obtenir les paramètres de conception du deuxième verre ophtalmique faisant référence comprend l'étape consistant à mesurer des paramètres de conception qui sont associés au porteur ou l'étape consistant à récupérer les paramètres de conception dans une base de données de références ophtalmiques.

8. Procédé selon l'une des revendications 3 à 7, dans lequel le ou les paramètres de conception sont choisis parmi : forme de la monture, morphologie du visage du porteur, position du verre ophtalmique devant l'oeil, niveau de sensibilité du porteur à la lumière, prescription, valeur d'addition, zone d'usure sur une période déterminée, distance de lecture, coefficient oeil/tête, abaissement de regard moyen en vision de près, ratio NVB, variabilité dans le temps d'un de ceux-ci, choix du traitement appliqué.

9. Procédé selon l'une des revendications précédentes, dans lequel le ou les paramètres de comparaison sont choisis parmi : LPX%, notamment avec X égal à 100 ; $\Delta$LPX%, notamment X égal à 85 ; décalage latéral en vision de près par rapport à la croix de montage en vision de loin ; largeur de champs ; épaisseur du verre ophtalmique en au moins un point ; poids du verre ophtalmique ; matière du verre ophtalmique ; coloration du verre ophtalmique ; type de revêtement ; un niveau d'aberration optique en au moins un point ; un niveau de contraste/acuité en au moins un point ; un niveau de grossissement en au moins un point ; un niveau de transmission en au moins un point ; un niveau de teinte en au moins un point ; et niveau et type de traitement (tel que antireflet), dans lequel le paramètre LPX% est la longueur de progression définie par la distance verticale entre la croix de montage et le point d'intersection de la direction de regard correspondant à la direction de regard en vision de près avec le plan du verre et où, le long de la méridienne, le porteur perçoit une puissance équivalente à la puissance en vision de loin augmentée de X% de l'addition prescrite.

10. Procédé selon la revendication 3, comprenant en outre l'étape consistant à sélectionner un domaine chromatique à l'intérieur de l'espace de couleurs adapté à une anomalie visuelle de l'utilisateur.

11. Procédé selon l'une des revendications précédentes, dans lequel l'espace de couleur, respectivement le domaine chromatique, est un espace, respectivement domaine, adapté à la vision humaine de sorte à être perceptuellement uniforme pour un oeil humain, préférablement la différence minimale distinguable par l'utilisateur $\Delta E$ est calculée

selon la norme ∆E CIE 1994, CIE 2000 ou CMC.

**12.** Procédé selon l'une des revendications précédentes, dans lequel le stimulus est un stimulus visuel et l'espace de stimuli est un espace de formes avec distance perceptuelle.

**13.** Procédé selon l'une des revendications précédentes, comprenant en outre l'étape consistant à ajuster :

- le niveau de stimulus sensoriel à la sensibilité de l'utilisateur au stimulus sensoriel ; ou
- le seuil local à la capacité du porteur à distinguer les propriétés du premier verre ophtalmique et celles de la référence ophtalmique.


**Patentansprüche**

**1.** System zur Bestimmung des Differenzniveaus zwischen zwei ophthalmischen Gläsern, die durch einen oder mehrere Vergleichsparameter gekennzeichnet sind, die Vergleichsparameter werden unter den Parametern ausgewählt, die eine oder mehrere der folgenden Eigenschaften reflektieren: geometrische, optische, mechanische, Komfort- und ästhetische Eigenschaften der ophthalmischen Gläser, das enthält:

- eine Erfassungsschnittstelle (11) von Parametern, die einem ophthalmischen Glas, das dazu bestimmt ist, von einem zukünftigen Träger getragen zu werden, und einer ophthalmischen Referenz entsprechen;
- einen Wandler (12), der konfiguriert ist, die dem ersten ophthalmischen Glas entsprechenden Vergleichsparameter einer ersten Position in einem Reizraum und die der ophthalmischen Referenz entsprechenden einer zweiten Position des Reizraums zuzuordnen, und mit der Erfassungsschnittstelle (11) verbunden ist, wobei jeder Punkt des Reizraums einem sensorischen Reizniveau entspricht, wobei der sensorische Reiz ein visueller Reiz ist und der Reizraum ein Farbenraum ist, vorzugsweise ausgewählt unter CIE RGB, CIE XYZ, CIE xyY, CIE UVW, CIE U'V'W', CIE L*a*b*, CIE LCH, CIE L*u*v*;
- einen Rechner (13), der konfiguriert ist, einen Abstand zwischen den Vergleichsparametern des ersten ophthalmischen Glases und denjenigen der ophthalmischen Referenz zu bestimmen, und mit der Erfassungsschnittstelle (11) und mit dem Wandler (12) verbunden ist, wobei die Vergleichsparameter ausgehend von Definitionsparametern des ersten ophthalmischen Glases und der ophthalmischen Referenz bestimmt werden, und wobei die Definitionsparameter des ersten ophthalmischen Glases ausgehend von am Träger gemessenen Gestaltungsparametern bestimmt werden;

wobei der Wandler (12) geeignet ist, den oder die Vergleichsparameter eines ophthalmischen Glases einem Punkt des Reizraums zuzuordnen, damit:

- wenn eine erste Position und eine zweite Position im Reizraum zwei sensorischen Reizniveaus entsprechen, die ein Benutzer, für den die Reize bestimmt sind, sensorisch unterscheiden kann, der Abstand zwischen den Vergleichsparametern, von denen ausgehend die erste Position bestimmt wird, und den Vergleichsparametern, von denen ausgehend die zweite Position bestimmt wird, größer ist als eine lokale Schwelle, und der Benutzer fähig ist, eine Differenz in den geometrischen Eigenschaften des ersten ophthalmischen Glases ($V_1$) bezüglich der ophthalmischen Referenz ($V_{ref}$) durch das Glas hindurch zu erkennen, so dass, je mehr die sensorischen Reize vom Benutzer als unterschiedlich wahrgenommen werden, und desto größer die Differenz zwischen dem ersten ophthalmischen Glas und der ophthalmischen Referenz ist; und
- andernfalls der Abstand zwischen den Vergleichsparametern, von denen ausgehend die erste Position bestimmt wird, und den Vergleichsparametern, von denen ausgehend die zweite Position bestimmt wird, kleiner ist als eine lokale Schwelle, und der Benutzer nicht fähig ist, eine Differenz in den geometrischen Eigenschaften des ersten ophthalmischen Glases ($V_1$) bezüglich der ophthalmischen Referenz ($V_{ref}$) zu erkennen.

**2.** System nach Anspruch 1, das außerdem einen Auslöser (16) von Reizen, um sensorische Reize zu verursachen, und mit dem Wandler (12) verbunden enthält.

**3.** Verfahren zur Bestimmung eines Differenzniveaus zwischen einem ersten ophthalmischen Glas ($V_1$), das dazu bestimmt ist, von einem zukünftigen Träger getragen zu werden, und einer ophthalmischen Referenz ($V_{ref}$), **gekennzeichnet durch** einen oder mehrere Vergleichsparameter (PCP ($V_1$) ; PCP ($V_{ref}$)), wobei die Vergleichsparameter unter den Parametern ausgewählt werden, die eine oder mehrere der folgenden Eigenschaften reflektieren: geometrische, optische, mechanische, Komfort- und ästhetische Eigenschaften des ersten ophthalmischen Glases und der ophthalmischen Referenz, wobei das Verfahren von dem System nach Anspruch 1 oder Anspruch 2 implementiert wird, wobei das Verfahren die Schritte enthält, die darin bestehen:

- den oder die dem ersten ophthalmischen Glas ($V_1$) entsprechenden Vergleichsparameter ($PCP(V_1)$) zu erhalten;
- die Position ($S_1$) des ersten ophthalmischen Glases ($V_1$) im Reizraum (ESS) zu bestimmen, indem der oder die Vergleichsparameter ($PCP(V_1)$) des ersten ophthalmischen Glases einem Punkt des Reizraums (ESS) zugeordnet werden,
- den oder die der ophthalmischen Referenz ($V_{ref}$) entsprechenden Vergleichsparameter ($PCP(V_{ref})$) zu erhalten;
- die Position ($S_{ref}$) der ophthalmischen Referenz ($V_{ref}$) im Reizraum (ESS) zu bestimmen, indem der oder die Vergleichsparameter ($PCP(V_{ref})$) der ophthalmischen Referenz einem Punkt des Reizraums (ESS) zugeordnet werden;
- einen Abstand ($\|PCP_1 - PCP_2\|$) zwischen dem oder den Vergleichsparametern ($PCP(V_1)$) des ersten ophthalmischen Glases und dem oder den Vergleichsparametern ($PCP(V_{ref})$) der ophthalmischen Referenz zu bestimmen;

wobei die Zuordnung des oder der Vergleichsparameter eines ophthalmischen Glases oder einer ophthalmischen Referenz zu einem Punkt des Reizraums so definiert wird, dass:

- wenn die Position ($S_1$) des ersten ophthalmischen Glases ($V_1$) und die Position ($S_{ref}$) der ophthalmischen Referenz ($V_{ref}$) im Reizraum (ESS) zwei sensorischen Reizniveaus entsprechen, die ein Benutzer, für den die Reize bestimmt sind, sensorisch unterscheiden kann, der Abstand ($\|PCP_1 - PCP_2\|$) größer ist als eine lokale Schwelle, und der Benutzer fähig ist, eine Differenz in den geometrischen Eigenschaften des ersten ophthalmischen Glases ($V_1$) bezüglich der ophthalmischen Referenz ($V_{ref}$) durch das Glas hindurch wahrzunehmen, so dass je mehr die sensorischen Reize vom Benutzer als unterschiedlich wahrgenommen werden und desto größer ist die Differenz zwischen dem ersten ophthalmischen Glas und der ophthalmischen Referenz;
- andernfalls der Abstand ($\|PCP_1 - PCP_2\|$) kleiner ist als eine lokale Schwelle und der Benutzer nicht fähig ist, eine Differenz in den geometrischen Eigenschaften des ersten ophthalmischen Glases ($V_1$) bezüglich der ophthalmischen Referenz ($V_{ref}$) zu erkennen,

wobei der Schritt, der darin besteht, die Vergleichsparameter des ersten ophthalmischen Glases zu erhalten, die Schritte enthält, die darin bestehen:

- Gestaltungsparameter des ersten ophthalmischen Glases zu erhalten, Definitionsparameter des ersten ophthalmischen Glases direkt ausgehend von den Gestaltungsparametern des ersten ophthalmischen Glases zu bestimmen, und die Vergleichsparameter des ersten ophthalmischen Glases direkt ausgehend von den Definitionsparametern des ersten ophthalmischen Glases zu bestimmen; oder

wobei der Schritt, der darin besteht, die Gestaltungsparameter des ersten ophthalmischen Glases zu erhalten, darin besteht, Gestaltungsparameter zu messen, die dem Träger zugeordnet sind.

4. Verfahren nach Anspruch 3, wobei der oder die Vergleichsparameter gewählt werden unter:

LP100%, seitliche Verschiebung in Nahsicht bezüglich des Montagekreuzes in Fernsicht, Feldbreite, Dicke des ophthalmischen Glases an mindestens einem Punkt, Gewicht des ophthalmischen Glases, Material des ophthalmischen Glases, Färbung des ophthalmischen Glases, Beschichtungstyp, ein optisches Aberrationsniveau an mindestens einem Punkt, ein Kontrast/Schärfe-Niveau an mindestens einem Punkt, ein Vergrößerungsniveau an mindestens einem Punkt, ein Übertragungsniveau an mindestens einem Punkt, ein Tönungsniveau an mindestens einem Punkt und Verarbeitungsniveau und -typ,
wobei LP100% die Progressionslänge definiert durch einen senkrechten Abstand zwischen einem Montagekreuz und einem Schnittpunkt der Blickrichtung entsprechend einer Blickrichtung in Nahsicht mit der Ebene des Glases ist, und wobei, entlang des Meridians, der Träger eine Stärke entsprechend der Fernsichtstärke erhöht um 100% der vorgeschriebenen Addition wahrnimmt;
wobei das Verfahren die Schritte enthält, die darin bestehen:

- den oder die Vergleichsparameter ($PCP(V_1)$) entsprechend dem ersten ophthalmischen Glas ($V_1$) zu erhalten;
- die Position ($S_1$) des ersten ophthalmischen Glases ($V_1$) in einem Raum visueller oder auditiver Reize (ESS) zu bestimmen, indem der oder die Vergleichsparameter (PCP($V_1$)) des ersten ophthalmischen Glases einem Punkt des Reizraums (ESS) zugeordnet werden, wobei jeder Punkt des Reizraums einem visuellen oder auditiven Reizniveau entspricht;

- den oder die Vergleichsparameter (PCP($V_{ref}$)) entsprechend einem zweiten ophthalmischen Glas ($V_2$) zu erhalten;
- die Position ($S_2$) der ophthalmischen Referenz ($V_2$) im Raum visueller oder auditiver Reize (ESS) zu bestimmen, indem der oder die Vergleichsparameter (PCP($V_2$)) des zweiten ophthalmischen Glases einem Punkt des Reizraums (ESS) zugeordnet werden;
- einen Abstand ($\|PCP_1\text{-}PCP_2\|$) zwischen dem oder den Vergleichsparametern (PCP($V_1$)) des ersten ophthalmischen Glases und dem oder den Vergleichsparametern (PCP($V_2$)) des zweiten ophthalmischen Glases zu bestimmen;

wobei die Zuordnung des oder der Vergleichsparameter eines ophthalmischen Glases oder einer ophthalmischen Referenz zu einem Punkt des Reizraums so definiert wird, dass:

$$\begin{cases} \|S_1 - S_2\| \geq \Delta Sschwelle \Leftrightarrow \|PCP_1 - PCP_2\| \geq \Delta D \\ \|S_1 - S_2\| < \Delta Sschwelle \Leftrightarrow \|PCP_1 - PCP_2\| < \Delta D \end{cases}$$

wobei $\Delta$Sschwelle der minimale Abstand zwischen zwei Reizniveaus, den ein Benutzer unterscheiden kann, und $\Delta$D eine lokale Schwelle ist.

5. Verfahren nach Anspruch 3, das außerdem den Schritt enthält, der darin besteht, die sensorischen Reize zu verursachen, die dem ersten ophthalmischen Glas und der ophthalmischen Referenz entsprechen.

6. Verfahren nach einem der vorhergehenden Ansprüche, wobei der Schritt, der darin besteht, die Vergleichsparameter der ophthalmischen Referenz zu erhalten, die Schritte enthält, die darin bestehen:

- die Vergleichsparameter aus einer Datenbank von ophthalmischen Referenzen zu entnehmen; oder
- Gestaltungsparameter eines als ophthalmische Referenz dienenden zweiten ophthalmischen Glases zu erhalten und Vergleichsparameter der ophthalmischen Referenz ausgehend von den Gestaltungsparametern des zweiten ophthalmischen Glases zu bestimmen; oder
- Gestaltungsparameter eines als ophthalmische Referenz dienenden zweiten ophthalmischen Glases zu erhalten, Definitionsparameter des zweiten ophthalmischen Glases ausgehend von den Gestaltungsparametern des zweiten ophthalmischen Glases zu bestimmen, und die Vergleichsparameter der ophthalmischen Referenz ausgehend von den Definitionsparametern des zweiten ophthalmischen Glases zu bestimmen; oder
- Definitionsparameter eines als ophthalmische Referenz dienenden zweiten ophthalmischen Glases zu erhalten und Vergleichsparameter der ophthalmischen Referenz ausgehend von den Definitionsparametern des zweiten ophthalmischen Glases zu bestimmen.

7. Verfahren nach Anspruch 6, wobei der Schritt, der darin besteht, die Gestaltungsparameter des als Referenz dienenden zweiten ophthalmischen Glases zu erhalten, den Schritt, der darin besteht, Gestaltungsparameter zu messen, die dem Träger zugeordnet sind, oder den Schritt enthält, der darin besteht, die Gestaltungsparameter in einer Datenbank von ophthalmischen Referenzen abzurufen.

8. Verfahren nach einem der Ansprüche 3 bis 7, wobei der oder die Gestaltungsparameter gewählt werden unter: Form der Fassung, Morphologie des Gesichts des Trägers, Position des ophthalmischen Glases vor dem Auge, Lichtempfindlichkeitsniveau des Trägers, Verschreibung, Additionswert, Abnutzungsbereich über einen bestimmten Zeitraum, Leseabstand, Auge/Kopf-Koeffizient, mittlere Blicksenkung in Nahsicht, NVB-Verhältnis, zeitliche Variabilität eines von diesen, Wahl der angewendeten Verarbeitung.

9. Verfahren nach einem der vorhergehenden Ansprüche, wobei der oder die Vergleichsparameter gewählt werden unter: LPX%, insbesondere mit X gleich 100; $\Delta$LPX%, insbesondere X gleich 85; seitliche Verschiebung in Nahsicht bezüglich des Montagekreuzes in Fernsicht; Feldbreite; Dicke des ophthalmischen Glases an mindestens einem Punkt; Gewicht des ophthalmischen Glases; Material des ophthalmischen Glases; Färbung des ophthalmischen Glases; Beschichtungstyp; ein optisches Aberrationsniveau an mindestens einem Punkt; ein Kontrast/Schärfe-Niveau an mindestens einem Punkt; ein Vergrößerungsniveau an mindestens einem Punkt; ein Übertragungsniveau an mindestens einem Punkt; ein Tönungsniveau an mindestens einem Punkt; und Bearbeitungsniveau und -typ (wie Entspiegelung),

wobei der Parameter LPX% die Progressionslänge definiert durch den senkrechten Abstand zwischen dem Montagekreuz und dem Schnittpunkt der Blickrichtung entsprechend der Nahsicht-Blickrichtung mit der Ebene des Glases ist, und wobei, entlang des Meridians, der Träger eine Stärke gleich der Fernsichtstärke erhöht um X% der vorgeschriebenen Addition wahrnimmt.

10. Verfahren nach Anspruch 3, das außerdem den Schritt enthält, der darin besteht, einen chromatischen Bereich innerhalb des Farbenraums auszuwählen, der an eine visuelle Anomalie des Benutzers angepasst ist.

11. Verfahren nach einem der vorhergehenden Ansprüche, wobei der Farbenraum, bzw. der chromatische Bereich, ein Raum, bzw. ein Bereich ist, der an die menschliche Sicht angepasst ist, um für ein menschliches Auge wahrnehmbar gleichförmig zu sein, vorzugsweise wird die vom Benutzer unterscheidbare minimale Differenz ΔE gemäß der Norm ΔE CIE 1994, CIE 2000 oder CMC berechnet.

12. Verfahren nach einem der vorhergehenden Ansprüche, wobei der Reiz ein visueller Reiz und der Reizraum ein Formenraum mit Wahrnehmungsabstand ist.

13. Verfahren nach einem der vorhergehenden Ansprüche, das außerdem den Schritt enthält, der darin besteht, anzugleichen:

- das sensorische Reizniveau an die Empfindlichkeit des Benutzers für den sensorischen Reiz; oder
- die lokale Schwelle an die Fähigkeit des Trägers, die Eigenschaften des ersten ophthalmischen Glases und diejenigen der ophthalmischen Referenz zu unterscheiden.

## Claims

1. System for determining the level of difference between two ophthalmic lenses **characterized by** one or more comparison parameters, the comparison parameters being selected from parameters reflecting one or more of the following properties: geometric properties, optical properties, mechanical properties, and properties in respect of the comfort and aesthetics of the ophthalmic lenses, comprising:

- an interface (11) for acquiring parameters corresponding to an ophthalmic lens intended to be worn by a future wearer and to an ophthalmic reference;
- a converter (12) configured to associate the comparison parameters corresponding to the first ophthalmic lens with a first position in a stimuli space and the comparison parameters corresponding to the ophthalmic reference with a second position in the stimuli space, and connected to the acquiring interface (11), each point in the stimuli space corresponding to one level of sensory stimulus, the sensory stimulus being a visual stimulus and the stimuli space being a colour space, preferably chosen from CIE RGB, CIE XYZ, CIE xyY, CIE UVW, CIE U'V'W', CIE L*a*b*, CIE LCH, and CIE L*u*v*;
- a computer (13) configured to determine a distance between the comparison parameters of the first ophthalmic lens and the comparison parameters of the ophthalmic reference, and connected to the acquiring interface (11) and to the converter (12), where the comparison parameters are determined from definition parameters of the first ophthalmic lens and ophthalmic reference, and where the definition parameters of the first ophthalmic lens are determined from design parameters measured on the wearer;

the converter (12) being configured to associate the one or more comparison parameters of an ophthalmic lens with a point in the stimuli space so that:

- if a first position and a second position in the stimuli space correspond to two levels of sensory stimulus that a user for whom the stimuli are intended is able to distinguish between sensorily, then the distance between the comparison parameters on the basis of which the first position is determined and the comparison parameters on the basis of which the second position is determined is greater than a local threshold and the user is capable of discerning a difference in the geometric properties of the first ophthalmic lens ($V_1$) with respect to the ophthalmic reference ($V_{ref}$) through the lens, so that the more the sensory stimuli are perceived as being different by the user the greater the difference between the first ophthalmic lens and the ophthalmic reference; and
- otherwise the distance between the comparison parameters on the basis of which the first position is determined and the comparison parameters on the basis of which the second position is determined is less than a local threshold and the user is not capable of discerning a difference in the geometric properties of the first ophthalmic lens ($V_1$) with respect to the ophthalmic reference ($V_{ref}$).

2. System according to Claim 1, further comprising a stimuli trigger (16) for causing sensory stimuli and connected to the converter (12).

3. Method for determining the level of difference between a first ophthalmic lens ($V_1$), intended to be worn by a future wearer, and an ophthalmic reference ($V_{ref}$), which are **characterized by** one or more comparison parameters ($PCP(V_1)$; $PCP(V_{ref})$), the comparison parameters being selected from parameters reflecting one or more of the following properties: geometric properties, optical properties, mechanical properties, and properties in respect of the comfort and aesthetics of the first ophthalmic lens and ophthalmic reference,

the method being implemented by the system according to Claim 1 or Claim 2,
the method comprising steps of:

- obtaining the one or more comparison parameters ($PCP(V_1)$) corresponding to the first ophthalmic lens ($V_1$);
- determining the position ($S_1$) of the first ophthalmic lens ($V_1$) in the stimuli space (ESS) by associating the one or more comparison parameters ($PCP(V_1)$) of the first ophthalmic lens with a point in the stimuli space (ESS),
- obtaining the one or more comparison parameters ($PCP(V_{ref})$) corresponding to the ophthalmic reference ($V_{ref}$);
- determining the position ($S_{ref}$) of the ophthalmic reference ($V_{ref}$) in the stimuli space (ESS) by associating the one or more comparison parameters ($PCP(V_{ref})$) of the ophthalmic reference with a point in the stimuli space (ESS);
- determining a distance ($\|PCP_1 - PCP_2\|$) between the one or more comparison parameters ($PCP(V_1)$) of the first ophthalmic lens and the one or more comparison parameters ($PCP(V_{ref})$) of the ophthalmic reference;

wherein the association of the one or more comparison parameters of an ophthalmic lens or of an ophthalmic reference with a point in the stimuli space is defined so that:

- if the position ($S_1$) of the first ophthalmic lens ($V_1$) and the position ($S_{ref}$) of the ophthalmic reference ($V_{ref}$) in the stimuli space (ESS) correspond to two levels of sensory stimulus that a user for whom the stimuli are intended is able to distinguish between sensorily, then the distance ($\|PCP_1 - PCP_2\|$) is greater than a local threshold and the user is capable of discerning a difference in the geometric properties of the first ophthalmic lens ($V_1$) with respect to the ophthalmic reference ($V_{ref}$) through the lens so that the more the sensory stimuli are perceived as being different by the user the greater the difference between the first ophthalmic lens and the ophthalmic reference;
- otherwise the distance ($\|PCP_1 - PCP_2\|$) is less than a local threshold and the user is not capable of discerning a difference in the geometric properties of the first ophthalmic lens ($V_1$) with respect to the ophthalmic reference ($V_{ref}$),

wherein the step of obtaining the comparison parameters of the first ophthalmic lens comprises steps of:

- obtaining design parameters of the first ophthalmic lens, determining definition parameters of the first ophthalmic lens directly on the basis of the design parameters of the first ophthalmic lens, and determining the comparison parameters of the first ophthalmic lens directly on the basis of the definition parameters of the first ophthalmic lens; or

wherein the step of obtaining the design parameters of the first ophthalmic lens comprises the step of measuring design parameters that are associated with the wearer.

4. Method according to Claim 3, wherein the one or more comparison parameters are chosen from:

LP 100%, near-vision inset with respect to the far-vision fitting cross, field width, thickness of the ophthalmic lens at least at one point, weight of the ophthalmic lens, material of the ophthalmic lens, colouration of the ophthalmic lens, type of coating, a level of optical aberration at least at one point, a level of contrast/acuity at least at one point, a level of magnification at least at one point, a level of transmittance at least at one point, a tint level at least at one point, and level and type of treatment,

LP 100% being the progression length defined by a vertical distance between a fitting cross and a point of intersection of the gaze direction corresponding to a near-vision gaze direction with the plane of the lens and where, along the meridian, the wearer perceives a power equivalent to the far-vision power increased by 100% of the prescribed addition;

wherein the method comprises steps of:

- obtaining the one or more comparison parameters ($PCP(V_1)$) corresponding to the first ophthalmic lens ($V_1$);
- determining the position ($S_1$) of the first ophthalmic lens ($V_1$) in a visual or auditory stimuli space (ESS) by associating the one or more comparison parameters ($PCP(V_1)$) of the first ophthalmic lens with a point in the stimuli space (ESS), each point in the stimuli space corresponding to one level of visual or auditory stimulus;
- obtaining the one or more comparison parameters ($PCP(V_{ref})$) corresponding to a second ophthalmic lens ($V_2$) ;
- determining the position ($S_2$) of the ophthalmic reference ($V_2$) in the visual or auditory stimuli space (ESS) by associating the one or more comparison parameters ($PCP(V_2)$) of the second ophthalmic lens with a point in the stimuli space (ESS) ;
- determining a distance ($\|PCP_1 - PCP_2\|$) between the one or more comparison parameters ($PCP(V_1)$) of the first ophthalmic lens and the one or more comparison parameters ($PCP(V_2)$) of the second ophthalmic lens;

wherein the association of the one or more comparison parameters of an ophthalmic lens or of an ophthalmic reference with a point in the stimuli space is defined so that:

$$\begin{cases} \|S_1 - S_2\| \geq \Delta Sthresh \Leftrightarrow \|PCP_1 - PCP_2\| \geq \Delta D \\ \|S_1 - S_2\| < \Delta Sthresh \Leftrightarrow \|PCP_1 - PCP_2\| < \Delta D \end{cases}$$

where $\Delta$Sthresh is the minimum distance between two levels of stimuli that a user is able to distinguish between and $\Delta$D a local threshold.

5. Method according to Claim 3, further comprising the step of causing sensory stimuli corresponding to the first ophthalmic lens and to the ophthalmic reference.

6. Method according to any of the preceding claims, wherein the step of obtaining the comparison parameters of the ophthalmic reference comprises steps of:

- retrieving the comparison parameters from a databank of ophthalmic references; or
- obtaining design parameters of a second ophthalmic lens acting as ophthalmic reference and determining comparison parameters of the ophthalmic reference on the basis of the design parameters of the second ophthalmic lens; or
- obtaining design parameters of a second ophthalmic lens acting as ophthalmic reference, determining definition parameters of the second ophthalmic lens on the basis of the design parameters of the second ophthalmic lens, and determining the comparison parameters of the ophthalmic reference on the basis of the definition parameters of the second ophthalmic lens; or
- obtaining definition parameters of a second ophthalmic lens acting as ophthalmic reference and determining comparison parameters of the ophthalmic reference on the basis of the definition parameters of the second ophthalmic lens.

7. Method according to Claim 6, wherein the step of obtaining the design parameters of the second ophthalmic lens acting as reference comprises the step of measuring design parameters that are associated with the wearer or the step of retrieving the design parameters from a database of ophthalmic references.

8. Method according to any of Claims 3 to 7, wherein the one or more design parameters are chosen from: shape of the frame, morphology of the face of the wearer, position of the ophthalmic lens in front of the eye, level of sensitivity of the wearer to light, prescription, addition value, region of use in a given period, reading distance, eye/head coefficient, average near-vision gaze lowering, NVB ratio, variability over time in one of the above, choice of the treatment applied.

9. Method according to any of the preceding claims, wherein the one or more comparison parameters are chosen from: LPX%, in particular with X equal to 100; ΔLPX%, in particular X equal to 85; near-vision inset with respect to the far-vision fitting cross; field width; thickness of the ophthalmic lens at least at one point; weight of the ophthalmic lens; material of the ophthalmic lens; colouration of the ophthalmic lens; type of coating; a level of optical aberration at least at one point; a level of contrast/acuity at least at one point; a level of magnification at least at one point; a level of transmittance at least at one point; a tint level at least at one point; and level and type of treatment (such as an anti-reflection treatment),
wherein the parameter LPX% is the progression length defined by the vertical distance between the fitting cross and the point of intersection of the gaze direction corresponding to the near-vision gaze direction with the plane of the lens and where, along the meridian, the wearer perceives a power equivalent to the far-vision power increased by X% of the prescribed addition.

10. Method according to Claim 3, further comprising the step of selecting a chromatic domain within the colour space, which chromatic domain is adapted to a visual anomaly of the user.

11. Method according to any of the preceding claims, wherein the colour space or colour domain is a space or domain, respectively, adapted to human vision so as to be perceptually uniform to a human eye, the minimum difference distinguishable by the user ΔE preferably being calculated according to the standard ΔE CIE 1994, CIE 2000 or CMC.

12. Method according to any of the preceding claims, wherein the stimulus is a visual stimulus and the stimuli space is a space of shapes with perceptual distance.

13. Method according to any of the preceding claims, further comprising the step of adjusting:

    - the level of sensory stimulus to the sensitivity of the user to the sensory stimulus; or
    - the local threshold to the ability of the wearer to distinguish the properties of the first ophthalmic lens from those of the ophthalmic reference.

Obtenir paramètre(s)
de comparaison
1$^{er}$ verre

Obtenir paramètre(s)
de comparaison
référence

Déterminer position des
1$^{er}$ verre et référence
dans espace de stimuli

Déterminer distance
entre paramètre(s) de
1$^{er}$ verre et référence

Provoquer stimuli
Correspondant aux
1$^{er}$ verre et référence

## FIG. 1

Obtenir paramètres
de conception

Déterminer paramètres de
comparaison à partir des
paramètre de conception

# FIG. 2

Obtenir paramètres
de conception

Déterminer paramètres de
définition à partir des
paramètre de conception

Déterminer paramètres de
comparaison à partir des
paramètre de définition

# FIG. 3

Obtenir paramètres
de définition

Déterminer paramètres de
comparaison à partir des
paramètre de définition

# FIG. 4

**FIG. 5**

**FIG. 6**

FIG. 7

FIG. 8

ΔE2000=7

ΔE2000=7

ΔE2000=7

...

ΔE2000=7

ΔE2000=7

ΔE2000=7

# FIG. 9

ΔE2000=7

ΔE2000=7

ΔE2000=7

ΔE2000=7

ΔE2000=7

ΔE2000=7

...

# FIG. 10

FIG. 11

FIG. 12

FIG. 13

FIG. 14

FIG. 15

FIG. 16

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006020422 A

- WO 2015067877 A

**Littérature non-brevet citée dans la description**

- Multimedia, IEEE Transactions on. *Retrieval by shape similarity with perceptual distance and effective indexing,* 2000, vol. 2, 225-239